Europäisches Patentamt

European Patent Office

Office européen des brevets

(19)

(11) Numéro de publication : **0 332 492 B1**

## (12) FASCICULE DE BREVET EUROPEEN

(45) Date de publication du fascicule du brevet :
**11.09.91 Bulletin 91/37**

(51) Int. Cl.⁵ : **B64C 27/82, B64C 11/18**

(21) Numéro de dépôt : **89400488.6**

(22) Date de dépôt : **22.02.89**

(54) **Pale pour hélice carénée à hautes performances, hélice carénée multipale pourvue de telles pales et agencement de rotor de queue à hélice carénée pour aéronef à voilure tournante.**

(30) Priorité : **07.03.88 FR 8802873**

(43) Date de publication de la demande :
**13.09.89 Bulletin 89/37**

(45) Mention de la délivrance du brevet :
**11.09.91 Bulletin 91/37**

(84) Etats contractants désignés :
**DE GB IT**

(56) Documents cités :
**FR-A- 1 050 902**
**FR-A- 2 590 229**
**US-A- 4 281 966**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Vuillet, Alain Eric
22 Rue de Sophoras La Bergerie
13320 Bouc Bel Air (FR)**

(74) Mandataire : **Bonnetat, Christian et al
CABINET BONNETAT 23, Rue de Léningrad
F-75008 Paris (FR)**

## Description

La présente invention concerne les pales pour hélices carénées à hautes performances, ainsi que les hélices carénées pourvues d'une pluralité de telles pales. Elle a pour objet d'accroître la poussée ou la traction délivrée par une telle hélice carénée et, corrélativement, de diminuer la puissance nécessaire pour entraîner cette hélice carénée en rotation. Quoique non exclusivement, la présente invention est particulièrement appropriée à être mise en oeuvre pour les rotors auxiliaires de queue des aéronefs à voilure tournante.

On sait que, par rapport à une hélice libre de même diamètre, une hélice carénée dans une veine permet théoriquement d'obtenir une poussée ou une traction sensiblement égale, avec un gain de puissance de l'ordre de 30%.

En effet, la veine améliore le rendement de l'hélice installée à l'intérieur, par rapport à une hélice libre, pour deux raisons :

— la circulation de l'air à travers la veine crée une dépression sur la carène et donc une poussée du carénage dans son ensemble, qui est sensiblement égale à la poussée de l'hélice elle-même ;

— l'écoulement au voisinage de la carène étant en dépression en aval de l'hélice, le flux ne se contracte pas, contrairement à ce qui se passe en aval d'une hélice libre, ce qui a pour conséquence d'augmenter le rendement de l'hélice et ce d'autant plus que l'on accroît la diffusion de la veine fluide sans décrochage dans la carène.

C'est pourquoi dans de nombreuses applications dans lesquelles, dans un encombrement limité, il s'agit de créer une force d'origine aérodynamique par une hélice, la solution d'une hélice carénée s'est avérée plus intéressante que celle apportée par une hélice libre.

Parmi ces applications, on peut citer les aéronefs à décollage et atterrissage vertical, dans lesquels une ou plusieurs hélices carénées à axe vertical sont intégrées dans la voilure fixe ou le fuselage, les véhicules à sustentation par coussin d'air dont le ou les générateurs d'air sous pression soufflant vers le sol sont des hélices logées à l'intérieur de carénages, eux-mêmes incorporés dans le corps du véhicule, et enfin les ventilateurs à pas variable, par exemple ceux qui sont incorporés dans une conduite de gaz pour créer une circulation importante de ce dernier dans la conduite.

Une application particulièrement intéressante en a été faite pour réaliser le rotor de queue des hélicoptères.

On sait que, sur ces aéronefs à voilure tournante sustentatrice, et en particulier sur les hélicoptères monorotors à entraînement mécanique, pour équilibrer en permanence le couple de réaction sur le fuselage résultant de l'entraînement en rotation de la voilure tournante, ainsi que pour contrôler l'aéronef sur son axe de lacet, on prévoit un rotor auxiliaire disposé au voisinage de l'extrémité de la queue de l'aéronef et exerçant une poussée transversale qui est adaptable à toutes les conditions de vol. Ce rotor auxiliaire de queue exerce donc sur l'aéronef un couple d'équilibre de sens opposé au couple de réaction du rotor principal à son entraînement en rotation par le ou les moteurs, c'est-à-dire en fait de même sens que le couple d'entraînement de la voilure tournante sustentatrice.

Des variations commandées de ce couple d'équilibre par la commande du pas des pales du rotor auxiliaire anti-couple permettent également au pilote de contrôler l'hélicoptère en cap autour de son axe de lacet.

Cependant, et particulièrement sur les hélicoptères de faible ou de moyen tonnage, le rotor anti-couple classique constitué par une hélice libre est particulièrement vulnérable aux agressions extérieures : il peut toucher le personnel au sol ou toucher le sol lui-même ou n'importe quel obstacle, toutes collisions qui compromettent directement l'équilibre de l'hélicoptère et sa sécurité de vol.

C'est notamment pour éviter ces graves inconvénients, que la demanderesse a développé sur les hélicoptères de léger et moyen tonnages, un agencement de rotor de queue multipale, caréné à l'intérieur de la dérive verticale de ces appareils.

Une telle installation est rendue possible et avantageuse par le fait que le diamètre d'un tel rotor caréné peut être relativement réduit par rapport à celui d'un rotor libre d'efficacité équivalente.

De tels agencements de rotors carénés anti-couple sont par exemple décrits dans les brevets US-A-3506219, US-A-3594097 et US-A-4281966.

Bien entendu, on cherche à obtenir de ce rotor auxiliaire, dans les meilleures conditions de rendement en ce qui concerne la puissance d'entraînement, une poussée maximale suffisamment élevée pour satisfaire les conditions de vol les plus exigeantes et on prévoit par la commande du pas des pales, de ne prélever qu'une partie de cette poussée maximale adaptée aux autres cas de vol.

On sait que l'efficacité sustentatrice des voilures tournantes est d'une façon générale caractérisée pour des conditions de fonctionnement stationnaires par un paramètre connu sous le nom de "Figure de Mérite" qui est le rapport entre la puissance minimale pour obtenir une traction ou poussée donnée et la puissance réelle effectivement mesurée.

Pour une hélice carénée, l'expression de ce paramètre est donnée par la formule connue suivante :

$$FM = \frac{1}{2\sqrt{\sigma}} \quad \frac{T}{P}\sqrt{\frac{T}{\rho\pi R^2}}$$

dans laquelle FM est la figure de mérite,

T la poussée ou la traction désirée,

P la puissance nécessaire à fournir à l'hélice,

$\rho$ la masse volumique de l'air,

R le rayon de l'hélice, et

$\sigma$ le coefficient de diffusion du flux aérodynamique en surface, ce coefficient $\sigma$ étant égal au rapport $\frac{S\infty}{S}$, avec $S\infty$ représentant la surface du flux à l'infini aval et S étant la surface du disque formé par l'hélice en rotation.

Pour augmenter la figure de mérite à puissance et encombrement fixés, il est donc nécessaire d'augmenter la poussée ou la traction de l'hélice.

La présente invention a notamment pour objet une pale pour hélice carénée, dont la géométrie de la partie aérodynamiquement active est optimisée pour que l'hélice délivre une poussée ou une traction aussi grande que possible en consommant une puissance aussi faible que possible pour son entraînement.

A cette fin, selon l'invention, la pale pour hélice carénée comportant un tunnel et un rotor à pales multiples coaxial audit tunnel, ledit rotor comportant un moyeu rotatif dont le rayon est de l'ordre de 40% de celui dudit tunnel et sur lequel lesdites pales sont montées par l'intermédiaire de pieds de pale, est caractérisé :

— en ce que, en plan, la partie aérodynamiquement active de ladite pale présente, au-delà du pied de pale, une forme rectangulaire de sorte que les profils successifs constituant ladite partie aérodynamiquement active ont tous la même corde $\underline{l}$ et que la section d'extrémité de ladite partie aérodynamiquement active est droite ; et

— en ce que, le long de l'envergure de la pale comptée à partir de l'axe du tunnel, entre une première section dont l'envergure relative (c'est-à-dire rapportée à l'envergure totale de la pale) est voisine de 45% et la section d'extrémité de ladite pale :

• la cambrure maximale relative des profils successifs constituant ladite partie aérodynamiquement active de la pale est positive et croît d'une valeur voisine de 0 à une valeur voisine de 0,04 ;

• le vrillage de ladite partie aérodynamiquement active de la pale décroît d'une première valeur voisine de 12° à ladite première section jusqu'à une seconde valeur voisine de 4° à une seconde section dont l'envergure relative est voisine de 0,86, puis croît de cette seconde section jusqu'à une troisième valeur voisine de 4,5° à ladite section d'extrémité de pale ; et

• l'épaisseur maximale relative desdits profils successifs décroît d'une valeur voisine de 13,5% à une valeur voisine de 9,5%.

La demanderesse a en effet trouvé qu'une telle combinaison d'évolutions de cambrure, de vrillage et d'épaisseur des profils, associée à une forme rectangulaire des pales (le bord d'attaque et le bord de fuite étant rectilignes et parallèles si l'effet du vrillage est négligé), conduisait à une pale présentant d'excellentes propriétés aérodynamiques (montrées ci-après) et d'excellentes propriétés de résistance mécanique, en particulier par une augmentation de la section de pale au voisinage de l'emplanture sur le moyeu.

Selon d'autres particularités préférées de la présente invention :

a) ladite cambrure maximale relative croît quasi linéairement de cette valeur voisine de 0 à une valeur égale à 0,036 pour une envergure relative égale à 0,845 en passant par les valeurs 0,01 et 0,02 respectivement pour les envergures relatives 0,53 et 0,66, puis croît de cette valeur égale à 0,036 pour l'envergure relative égale à 0,845 jusqu'à une valeur égale à 0,038 pour l'envergure relative égale à 0,93, et enfin est constante et égale à 0,038 entre les envergures relatives 0,93 et 1 ;

b) le pied de ladite pale présente des profils évolutifs dont la cambrure maximale relative est négative et croît d'une valeur égale sensiblement à – 0,013 pour une envergure relative égale à 0,40 à ladite valeur voisine de 0 pour une envergure relative égale à 0,45.

c) entre les envergures relatives 0,45 et 1, l'évolution du vrillage est au moins sensiblement parabolique, avec un minimum à l'envergure relative de 0,86.

d) l'axe de vrillage de ladite partie aérodynamiquement active est parallèle à la ligne de bord d'attaque et à la ligne de bord de fuite de celles-ci et est distant de ladite ligne de bord d'attaque d'une distance approximativement égale à 39% de la longueur de la corde des profils.

e) le vrillage du pied de ladite pale croît de ladite valeur voisine de 8° à une envergure relative voisine de 0,38 à ladite valeur voisine de 12° pour l'envergure relative égale à 0,45.

f) l'épaisseur maximale relative des profils décroît linéairement d'une valeur voisine de 13,9% pour une envergure relative égale à 0,40 à une valeur voisine de 9,5% pour une envergure relative égale à 0,93, et est constante et égale à ladite valeur voisine de 9,5% entre les envergures relatives respectivement égales à 0,93 et 1.

De préférence, les profils constituant lesdites pales sont ceux qui seront définis ci-après (voir aussi EP-A-0327435).

Les figures du dessin annexé feront bien comprendre comment l'invention peut être réalisée.

La figure 1 est une vue partielle de la partie arrière d'un hélicoptère pourvu d'un agencement de rotor caréné engendrant un écoulement d'air transversal pour équilibrer le couple d'entraînement du rotor principal sustentateur (non représenté).

La figure 2 est une coupe agrandie selon la ligne II-II de la figure 1.

La figure 3 montre en perspective une pale de rotor conforme à la présente invention.

Les figures 4a, 4b et 4c sont des sections de la pale montrée par la figure 3, respectivement selon les plans a-a, b-b et c-c de cette dernière figure.

Les figures 5a, 5b, 5c et 5d illustrent schématiquement, le long de l'envergure de la pale comptée à partir de l'axe de rotation X-X du rotor, respectivement la forme en plan d'un exemple de réalisation de ladite pale, la variation de cambrure relative, la variation du vrillage et la variation d'épaisseur relative.

Les figures 6a à 6e représentent schématiquement cinq profils référencés I à V, correspondant à cinq sections particulières de la pale le long de son envergure.

La figure 7 est un diagramme montrant la cambrure des profils I à V des figures 6a à 6e.

La figure 8 montre, en fonction du coefficient de portance maximal, la variation de la figure de mérite d'un rotor équipé de pales selon l'invention, en comparaison avec un rotor connu.

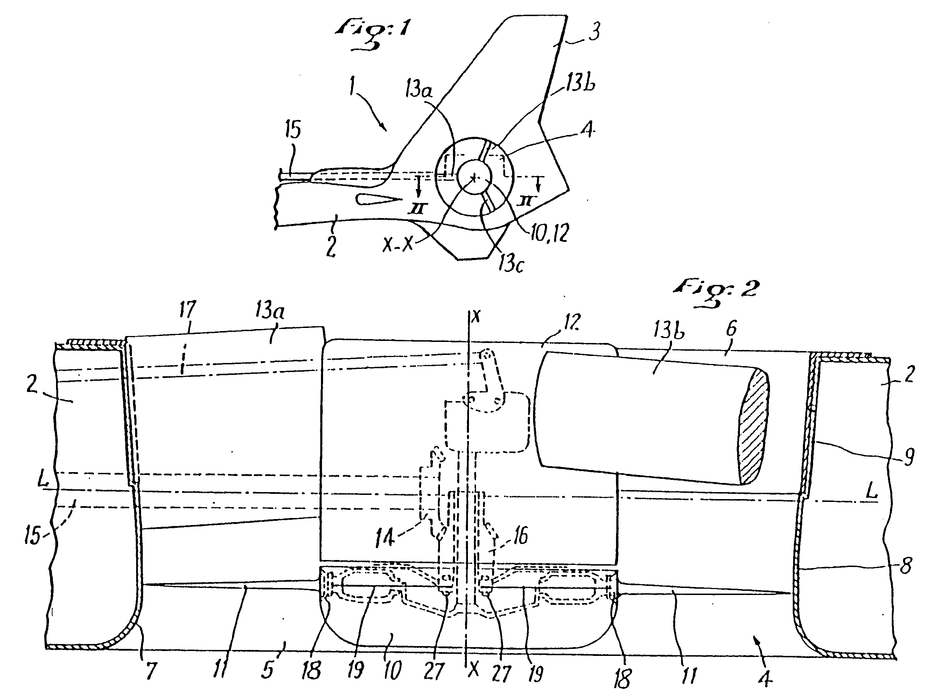

La queue 1 d'hélicoptère montrée par les figures 1 et 2 comporte une partie de fuselage 2 et une dérive verticale 3. A la base de la dérive verticale 3 est agencé un tunnel 4 traversant la partie de fuselage 2 de part en part, de sorte que ce tunnel comporte une entrée d'air 5 d'un côté du fuselage et une sortie d'air 6 de l'autre côté dudit fuselage (voir la figure 2).

Le tunnel 4 présente une forme de révolution autour d'un axe X-X, transversal à l'axe longitudinal L-L de l'hélicoptère. Par exemple, l'entrée d'air 5 présente un bord périphérique arrondi 7 qui est prolongé, vers la sortie d'air 6, par une portion cylindrique 8 elle-même prolongée jusqu'à ladite sortie d'air 6 par un divergent 9.

Dans le tunnel 4 est monté un moyeu rotatif 10 pourvu d'une pluralité de pales 11. Ce moyeu rotatif 10 est porté par un moyeu fixe 12 solidaire de la structure de l'hélicoptère par l'intermédiaire de trois bras 13a, 13b et 13c. Le moyeu rotatif 10 et le moyeu fixe 12 sont de forme cylindrique et sont centrés sur l'axe X-X du tunnel 4. Le moyeu rotatif 10 est disposé du côté de l'entrée d'air 5, de façon par exemple que les extrémités des pales 11 se trouvent en regard de la portion cylindrique 8 du tunnel 4, tandis que le moyeu fixe 12 se trouve du côté de la sortie d'air 6.

De façon connue, à l'intérieur du moyeu fixe 12 se trouve un mécanisme 14 d'entraînement en rotation du moyeu rotatif 10, lui-même entraîné par un arbre 15, mû par le ou les moteurs principal (non représenté) de l'aéronef destiné à l'entraînement de la voilure tournante sustentatrice (également non représentée). Ainsi, comme expliqué ci-dessus, les pales 11 du moyeu rotatif 10 créent l'écoulement d'air qui engendre la poussée transversale nécessaire à l'équilibre en lacet de l'hélicoptère.

De façon également connue, pour faire varier l'intensité de cette poussée transversale, on prévoit, à l'intérieur du moyeu fixe 12, et partiellement du moyeu rotatif 10, un système 16 de commande de l'angle de pas des pales 11, actionné par l'intermédiaire d'une bielle de commande 17.

Les pieds 18 des pales 11 sont montés rotatifs sur le moyeu rotatif 10 et sont reliés au système 16 de commande de pas. Lesdits pieds de pales 18 sont reliés au mécanisme de retenue et d'entraînement 14 par des faisceaux torsibles 19.

Comme montré par la figure 2, l'un des bras 13a de support du moyeu fixe 12 sert de carénage à l'arbre 15 et à la bielle de commande 17.

Les bras 13a, 13b et 13c peuvent être uniformément répartis à 120° autour de l'axe X-X et disposés avec un certain décalage relatif en arrière du plan des pales 11.

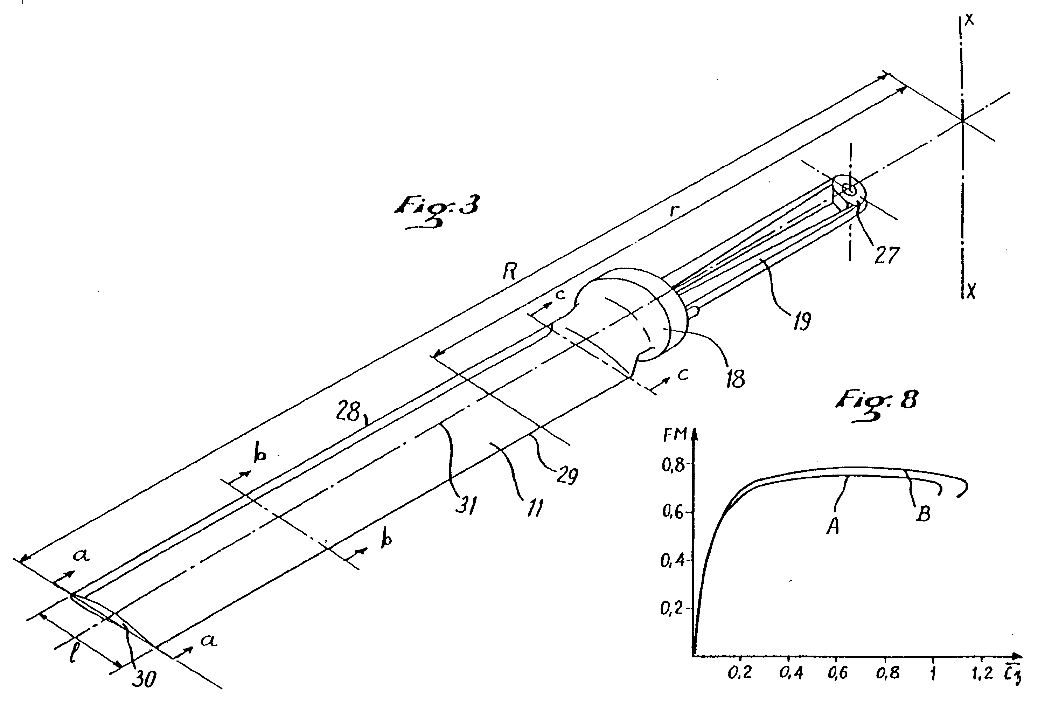

Sur la figure 3, on a représenté en perspective, une pale 11 du moyeu rotatif 10, avec son pied de pale 18 et son faisceau torsible 19, abstraction faite dudit moyeu. On y a représenté également l'axe de rotation X-X du moyeu rotatif 10, ainsi qu'une partie 27 des moyens d'attache de la bielle d'attache 19, et donc de la pale 11, au mécanisme de retenue et d'entraînement 14.

La pale 11 comporte, vue en plan, une ligne de bord d'attaque rectiligne 28. La ligne de bord de fuite 29 est également rectiligne. De plus, les lignes rectilignes de bord d'attaque 28 et de bord de fuite 29 sont parallèles entre elles.

Ainsi, en plan, la pale 11 présente une forme rectangulaire, avec une corde de profil I constante depuis le

4

pied de pale 18, jusqu'à sa section d'extrémité extérieure 30.

La pale 11 présente une envergure R, comptée à partir de l'axe de rotation X-X du moyeu rotatif 10. Ci-après, on désignera la position en envergure d'un profil (ou d'une section) de la pale 11 par la distance r séparant ce profil (ou cette section) de l'axe de rotation X-X dudit moyeu rotatif 10 et plus spécialement par l'envergure relative $\frac{r}{R}$ correspondant à cette position.

L'axe 31 de commande de pas de la pale 11 est parallèle aux lignes 28 et 29 de bord d'attaque et de bord de fuite.

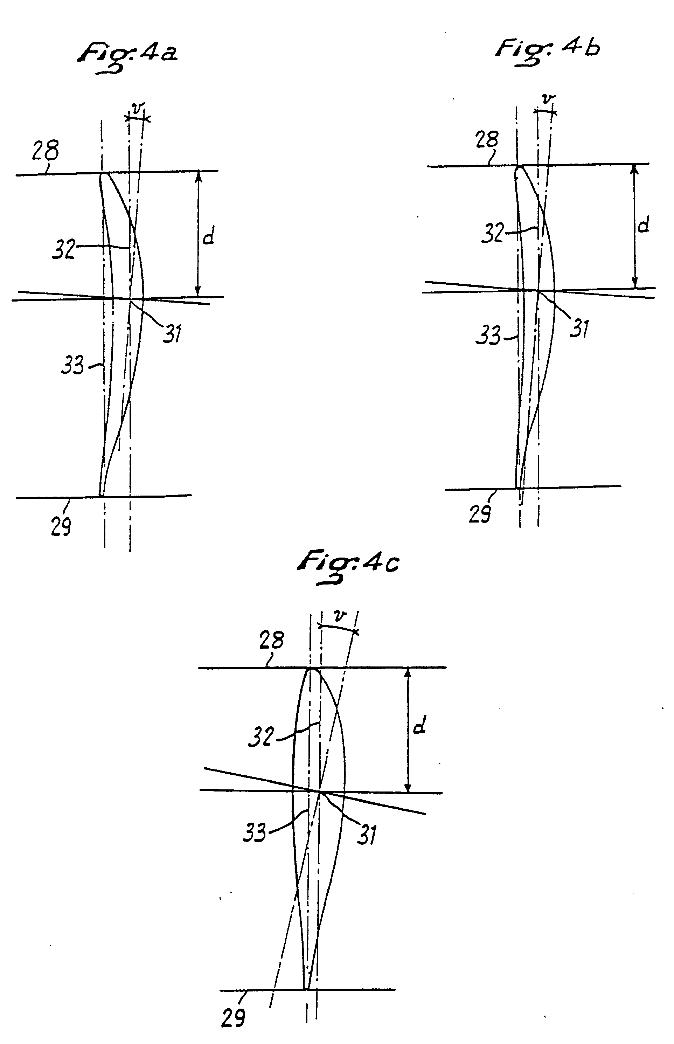

Les sections de la pale 11 montrées par les figures 4a, 4b et 4c correspondent respectivement aux plans de coupe a-a, b-b et c-c de la figure 3, c'est-à-dire à des plans dont les envergures relatives $\frac{r}{R}$ à l'axe X-X sont respectivement égales à 100%, 73% et 45%.

Les sections des figures 4a, 4b et 4c montrent que l'axe du vrillage v de la pale en envergure est confondu avec l'axe de commande de pas 31 et que cet axe de vrillage, qui est distant de la ligne de bord d'attaque 28 d'une distance d voisine de 39% de la longueur de la corde l, passe par le plan de mi-épaisseur 32 des profils correspondants, ce plan 32 étant parallèle au plan des cordes 33.

Les figures 4a, 4b et 4c montrent de plus que l'épaisseur, le vrillage et la cambrure de la pale 11 varient fortement en envergure.

Dans l'exemple de réalisation d'une pale 11 selon l'invention, illustrée par les figures 5a à 5d, on peut voir que la distance séparant l'axe X-X des moyens de fixation 27 est égale à 0,095 R, que le faisceau torsible 19 s'étend de 0,095 R à 0,38 R, que le pied de pale 18 s'étend de 0,38 R à 0,45 R et que la partie aérodynamiquement active de la pale 11 proprement dite s'étend de 0,45 R à R.

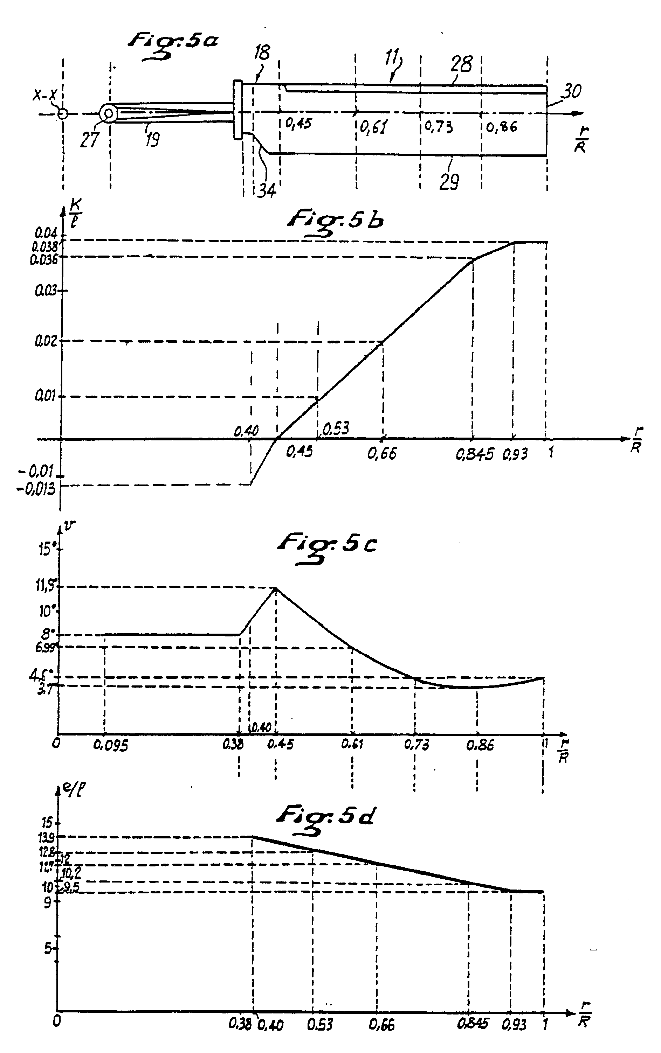

La cambrure maximale relative K/l (c'est-à-dire rapportée à la corde l) des profils successifs constituant la partie aérodynamiquement active de ladite pale est négative et croît d'une valeur égale à − 0,013 pour la section de pied de pale 18 disposée à 0,40 R jusqu'à 0 pour la section de pied de pale 18 disposée à 0,45 R. Entre 0,45 R et 0,845 R, la cambrure maximale relative des profils de la partie aérodynamiquement active de la pale 11 croît fortement et régulièrement (et de préférence sensiblement linéairement) de la valeur 0 à une valeur voisine de 0,036, en passant par une valeur voisine de 0,01 pour la section de pale disposée à 0,53 R et par une valeur voisine de 0,02 pour la section située à 0,66 R. Entre 0,845 R et 0,93 R, la cambrure maximale relative croît légèrement de la valeur 0,036 à la valeur 0,038, puis demeure constante à cette valeur 0,038 entre 0,93 R et R (voir la figure 5b).

Comme l'illustre la figure 5c, le vrillage v du pied de pale 18 croît fortement de 0,038 R à 0,45 R en passant de 8° à 11,9°. De 0,45 R à 0,86 R, le vrillage de la pale 11 décroît de 11,9° à 3,7° en passant par les valeurs 6,99° à 0,61 R et 4,6° à 0,73 R. Enfin, de 0,86 R à R, le vrillage croît de nouveau de 3,7° à 4,6°. De préférence, entre 0,45 R et R, la variation du vrillage v est au moins sensiblement parabolique.

L'épaisseur maximale relative $\frac{e}{l}$ du pied de pale 18 et de la pale 11 décroît linéairement de la valeur 13,9% pour la section disposée à 0,40 R à 9,5% pour la section disposée à 0,93 R en passant par les valeurs 12,8%, 11,7% et 10,2% respectivement pour les sections disposées à 0,53 R, 0,66 R et 0,845 R. Entre 0,93 R et R, cette épaisseur relative est constante et égale à 9,5% (voir la figure 5d).

Ainsi, pour engendrer la pale 11 et son pied de pale 18, on peut définir un certain nombre de profils de base destinés à constituer des sections déterminées de ceux-ci et à faire évoluer régulièrement les profils intermédiaires d'une portion de pale comprise entre deux profils de base, pour satisfaire les évolutions d'épaisseur et de cambrure relatives. Il suffit ensuite de caler chacun desdits profils de base et desdits profils intermédiaires autour de l'axe de vrillage 31 pour obtenir ladite pale.

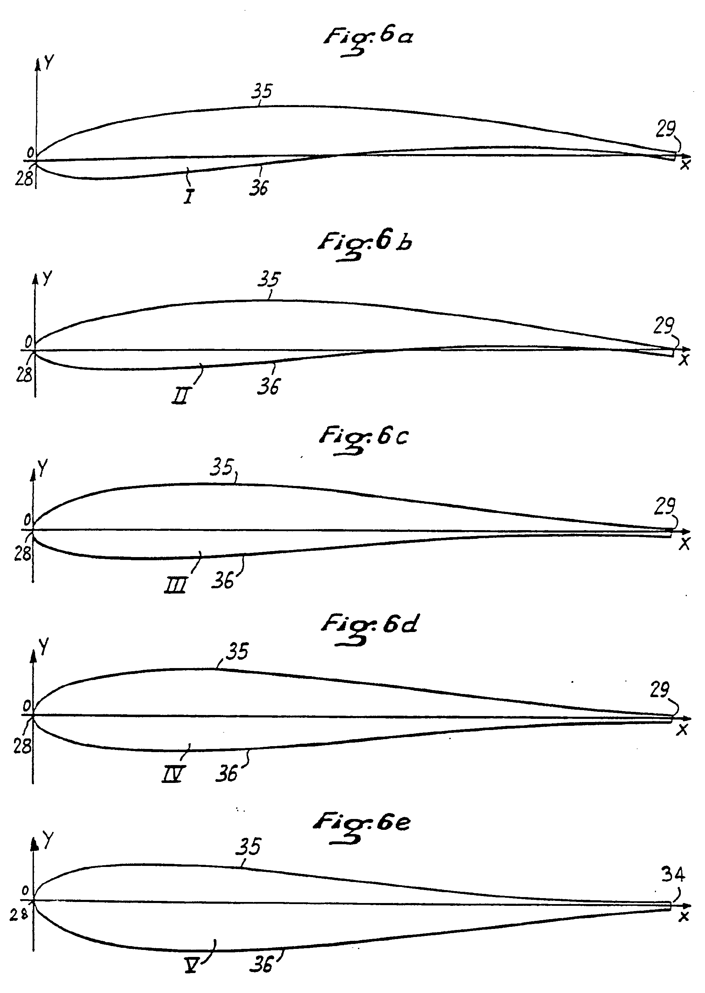

Par exemple, à cet effet, on peut définir cinq profils de base (voir EP-A-0327435) portant respectivement ci-après les références I, II, III, IV et V et présentant des épaisseurs maximales relatives respectives égales à 9,5%, 10,2%, 11,7%, 12,8% et 13,9%. Ainsi, le profil de base I sera utilisé entre R et 0,93 R, tandis que les profils II, III, IV et V seront respectivement disposés aux sections situées à 0,845 R, 0,66 R, 0,53 R et 0,40 R. On donne ci-après les définitions de tels profils, par rapport à un système d'axes rectangulaires 0X, 0Y, qui pour chacun d'eux a pour origine le bord d'attaque 28, l'axe des abscisses 0X étant confondu avec la corde et étant orienté du bord d'attaque 28 vers le bord de fuite 29 (pour les profils I, II, III et IV) ou 34 (pour le profil V), comme cela est représenté dans les figures 6a à 6e.

A- Exemple de profil I ayant une épaisseur maximale relative égale à 9,5% et utilisable entre R et 0,93 R (voir la figure 6a).

Un tel profil I peut être tel que :

— les ordonnées réduites de sa ligne d'extrados 35 sont données
- entre $X/l = 0$ et $X/l = 0,39433$, par la formule

(1) $Y/l = f1(X/l)^{1/2} + f2(X/l) + f3(X/l)^2 + f4(X/l)^3 + f5(X/l)^4 + f6(X/l)^5 + f7(X/l)^6$

avec

$f1 = +0,16227$
$f2 = -0,11704.10^{-1}$
$f3 = +0,13247$
$f4 = -0,25016.10$
$f5 = +0,10682.10^2$
$f6 = -0,22210.10^2$
$f7 = +0,17726.10^2$

- entre $X/l = 0,39433$ et $X/l = 1$, par la formule

(2) $Y/l = g0 + g1(X/l) + g2(X/l)^2 + g3(X/l)^3 + g4(X/l)^4 + g5(X/l)^5 + g6(X/l)^6$

avec

$g0 = +0,22968$
$g1 = -0,17493.10$
$g2 = +0,77952.10$
$g3 = -0,17457.10^2$
$g4 = +0,20845.10^2$
$g5 = -0,13004.10^2$
$g6 = +0,33371.10$

— alors que les ordonnées réduites de la ligne d'intrados 36 dudit profil sont données
- entre $X/l = 0$ et $X/l = 0,11862$, par la formule

(3) $Y/l = h1(X/l)^{1/2} + h2(X/l) + h3(X/l)^2 + h4(X/l)^3 + h5(X/l)^4 + h6(X/l)^5 + h7(X/l)^6$

avec

$h1 = -0,13971$
$h2 = +0,10480.10^{-3}$
$h3 = +0,51698.10$
$h4 = -0,11297.10^3$
$h5 = +0,14695.10^4$
$h6 = -0,96403.10^4$
$h7 = +0,24769.10^5$

- entre $X/l = 0,11862$ et $X/l = 1$, par la formule

(4) $Y/l = i0 + i1(X/l) + i2(X/l)^2 + i3(X/l)^3 + i4(X/l)^4 + i5(X/l)^5 + i6(X/l)^6$

avec

$i0 = -0,25915.10^{-1}$
$i1 = -0,96597.10^{-1}$
$i2 = +0,49503$
$i3 = +0,60418.10^{-1}$
$i4 = -0,17206.10$
$i5 = +0,20619.10$
$i6 = -0,77922$

B) Exemple de profil II ayant une épaisseur maximale relative égale à 10,2% et utilisable pour une section de pale disposée à 0,845 R (figure 6b)

Pour ce profil II :
— les ordonnées réduites de la ligne d'extrados 35 sont données
- entre $X/l = 0$ et $X/l = 0,39503$, par la formule

(5) $Y/l = j1(X/l)^{1/2} + j2(X/l) + j3(X/l)^2 + j4(X/l)^3 + j5(X/l)^4 + j6(X/l)^5 + j7(X/l)^6$

avec

$j1 = +0,14683$
$j2 = -0,67115.10^{-2}$
$j3 = +0,44720$
$j4 = -0,36828.10$
$j5 = +0,12651.10^2$
$j6 = -0,23835.10^2$
$j7 = +0,18155.10^2$

● entre $X/l = 0,39503$ et $X/l = 1$, par la formule

(6) $Y/l = k_0 + k_1(X/l) + k_2(X/l)^2 + k_3(X/l)^3 + k_4(X/l)^4 + k_5(X/l)^5 + k_6(X/l)^6$

avec

$k_0 = + 0,45955$

$k_1 = - 0,39834.10$

$k_2 = + 0,16726.10^2$

$k_3 = - 0,35737.10^2$

$k_4 = + 0,41088.10^2$

$k_5 = - 0,24557.10^2$

$k_6 = + 0,60088.10$

— alors que les ordonnées réduites de la ligne d'intrados 36 dudit profil sont données

● entre $X/l = 0$ et $X/l = 0,14473$, par la formule

(7) $Y/l = m_1(X/l)^{1/2} + m_2(X/l) + m_3(X/l)^2 + m_4(X/l)^3 + m_5(X/l)^4 + m_6(X/l)^5 + m_7(X/l)^6$

avec

$m_1 = - 0,13297$

$m_2 = + 0,36163.10^{-1}$

$m_3 = + 0,17284.10$

$m_4 = - 0,27664.10^2$

$m_5 = + 0,30633.10^3$

$m_6 = - 0,16978.10^4$

$m_7 = + 0,36477.10^4$

● entre $X/l = 0,14473$ et $X/l = 1$, par la formule

(8) $Y/l = n_0 + n_1(X/l) + n_2(X/l)^2 + n_3(X/l)^3 + n_4(X/l)^4 + n_5(X/l)^5 + n_6(X/l)^6$

avec

$n_0 = - 0,30824.10^{-1}$

$n_1 = - 0,20564.10^{-1}$

$n_2 = - 0,21738$

$n_3 = + 0,24105.10$

$n_4 = - 0,53752.10$

$n_5 = + 0,48110.10$

$n_6 = - 0,15826.10$

C) Exemple de profil III ayant une épaisseur maximale relative égale à 11,7% et utilisable pour une section de pale disposée à 0,66 R (figure 6C)

Pour ce profil III,

— les ordonnées réduites de la ligne d'extrados 35 sont données

● entre $X/l = 0$ et $X/l = 0,28515$, par la formule

(9) $Y/l = t_1(X/l)^{1/2} + t_2(X/l) + t_3(X/l)^2 + t_4(X/l)^3 + t_5(X/l)^4 + t_6(X/l)^5 + t_7(X/l)^6$

avec

$t_1 = + 0,21599$

$t_2 = - 0,17294$

$t_3 = + 0,22044.10$

$t_4 = - 0,26595.10^2$

$t_5 = + 0,14642.10^3$

$t_6 = - 0,39764.10^3$

$t_7 = + 0,42259.10^3$

● entre $X/l = 0,28515$ et $X/l = 1$, par la formule

(10) $Y/l = u_0 + u_1(X/l) + u_2(X/l)^2 + u_3(X/l)^3 + u_4(X/l)^4 + u_5(X/l)^5 + u_6(X/l)^6$

avec

$u_0 = + 0,39521.10^{-1}$

$u_1 = + 0,26170$

$u_2 = - 0,47274$

$u_3 = - 0,40872$

$u_4 = + 0,15968.10$

$u_5 = - 0,15222.10$

$u_6 = + 0,51057$

— alors que les ordonnées réduites de la ligne d'intrados 36 dudit profil sont données

• entre X/l = 0 et X/l = 0,17428, par la formule

(11) Y/l = v1(X/l)$^{1/2}$ + v2(X/l) + v3(X/l)$^2$ + v4(X/l)$^3$ + v5(X/l)$^4$ + v6(X/l)$^5$ + v7(X/l)$^6$

avec

v1 = − 0,16526

v2 = − 0,31162.10$^{-1}$

v3 = + 0,57567.10

v4 = − 0,10148.10$^3$

v5 = + 0,95843.10$^3$

v6 = − 0,44161.10$^4$

v7 = + 0,78519.10$^4$

• entre X/l = 0,17428 et X/l = 1, par la formule

(12) Y/l= w0 + w1(X/l) + w2(X/l)$^2$ + w3(X/l)$^3$ + w4(X/l)$^4$ + w5(X/l)$^5$ + w6(X/l)$^6$

avec

w0 = − 0,25152.10$^{-1}$

w1 = − 0,22525

w2 = + 0,89038

w3 = − 0,10131.10

w4 = + 0,16240

w5 = + 0,46968

w6 = − 0,26400

D) Exemple de profil IV ayant une épaisseur maximale relative égale à 12,8% et utilisable pour une section de pale disposée à 0,53 R (figure 6d)

Pour ce profil IV,

— les ordonnées réduites de la ligne d'extrados 35 sont données

• entre X/l = 0 et X/l = 0,26861, par la formule

(13) Y/l = α1(X/l)$^{1/2}$ + α2(X/l) + α3(X/l)$^2$ + α4(X/l)$^3$ + α5(X/l)$^4$ + α6(X/l)$^5$ + α7(X/l)$^6$

avec

α1 = + 0,19762

α2 = + 0,17213

α3 = − 0,53137.10

α4 = + 0,56025.10$^2$

α5 = − 0,32319.10$^3$

α6 = + 0,92088.10$^3$

α7 = − 0,10229.10$^4$

• entre X/l = 0,26861 et X/l = 1, par la formule

(14) Y/l = β0 + β1(X/l) + β2(X/l)$^2$ + β3(X/l)$^3$ + β4(X/l)$^4$ + β5(X/l)$^5$ + β6(X/l)$^6$

avec

β0 = + 0,28999.10$^{-1}$

β1 = + 0,38869

β2 = − 0,10798.10

β3 = + 0,80848

β4 = + 0,45025

β5 = − 0,10636.10

β6 = + 0,47182

— alors que les ordonnées réduites de la ligne d'intrados 36 dudit profil sont données

• entre X/l = 0 et X/l = 0,20934, par la formule

(15) Y/l= γ1(X/l)$^{1/2}$ + γ2(X/l) + γ3(X/l)$^2$ + γ4(X/l)$^3$ + γ5(X/l)$^4$ + γ6(X/l)$^5$ + γ7(X/l)$^6$

avec

γ1 = − 0,25376

γ2 = + 0,61860

γ3 = − 0,96212.10

γ4 = + 0,12843.10$^3$

γ5 = − 0,90701.10$^3$

γ6 = + 0,32291.10$^4$

γ7 = − 0,45418.10$^4$

• entre X/l = 0,20934 et X/l = 1, par la formule

$$(16) \quad Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6$$

avec

$\delta 0 = -0,25234.10^{-1}$

$\delta 1 = -0,32995$

$\delta 2 = +0,10890.10$

$\delta 3 = -0,10066.10$

$\delta 4 = -0,32520$

$\delta 5 = +0,11326.10$

$\delta 6 = -0,64043$

**E) Exemple de profil V ayant une épaisseur maximale relative égale à 13,9% et utilisable pour une section de pied de pale disposée à 0,40 R (figure 6R)**

Pour ce profil V,

— les ordonnées réduites de la ligne d'extrados 35 sont données

● entre X/l = 0 et X/l = 0,19606, par la formule

$$(17) \quad Y/l = \varepsilon 1(X/l)^{1/2} + \varepsilon 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6$$

avec

$\varepsilon 1 = +0,22917$

$\varepsilon 2 = -0,22972$

$\varepsilon 3 = +0,21262.10$

$\varepsilon 4 = -0,39557.10^2$

$\varepsilon 5 = +0,32628.10^3$

$\varepsilon 6 = -0,13077.10^4$

$\varepsilon 7 = +0,20370.10^4$

● entre X/l = 0,19606 et X/l = 1, par la formule

$$(18) \quad Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6$$

avec

$\lambda 0 = +0,32500.10^{-1}$

$\lambda 1 = +0,29684$

$\lambda 2 = -0,99723$

$\lambda 3 = +0,82973$

$\lambda 4 = +0,40616$

$\lambda 5 = -0,10053.10$

$\lambda 6 = +0,44222$

— alors que les ordonnées réduites de la ligne d'intrados 36 dudit profil sont données

● entre X/l = 0 et X/l = 0,26478, par la formule

$$(19) \quad Y/l = \mu 1(X/l)^{1/2} + \mu 2(X/l) + \mu 3(X/l)^2 + \mu 4(X/l)^3 + \mu 5(X/l)^4 + \mu 6(X/l)^5 + \mu 7(X/l)^6$$

avec

$\mu 1 = -0,19314$

$\mu 2 = -0,22031$

$\mu 3 = +0,44399.10$

$\mu 4 = -0,41389.10^2$

$\mu 5 = +0,23230.10^3$

$\mu 6 = -0,66179.10^3$

$\mu 7 = +0,74216.10^3$

● entre X/l = 0,26478 et X/l = 1, par la formule

$$(20) \quad Y/l = \nu 0 + \nu 1(X/l) + \nu 2(X/l)^2 + \nu 3(X/l)^3 + \nu 4(X/l)^4 + \nu 5(X/l)^5 + \nu 6(X/l)^6$$

avec

$\nu 0 = -0,42417.10^{-1}$

$\nu 1 = -0,29161$

$\nu 2 = +0,57883$

$\nu 3 = +0,41309$

$\nu 4 = -0,19045.10$

$\nu 5 = +0,18776.10$

$\nu 6 = -0,63583$

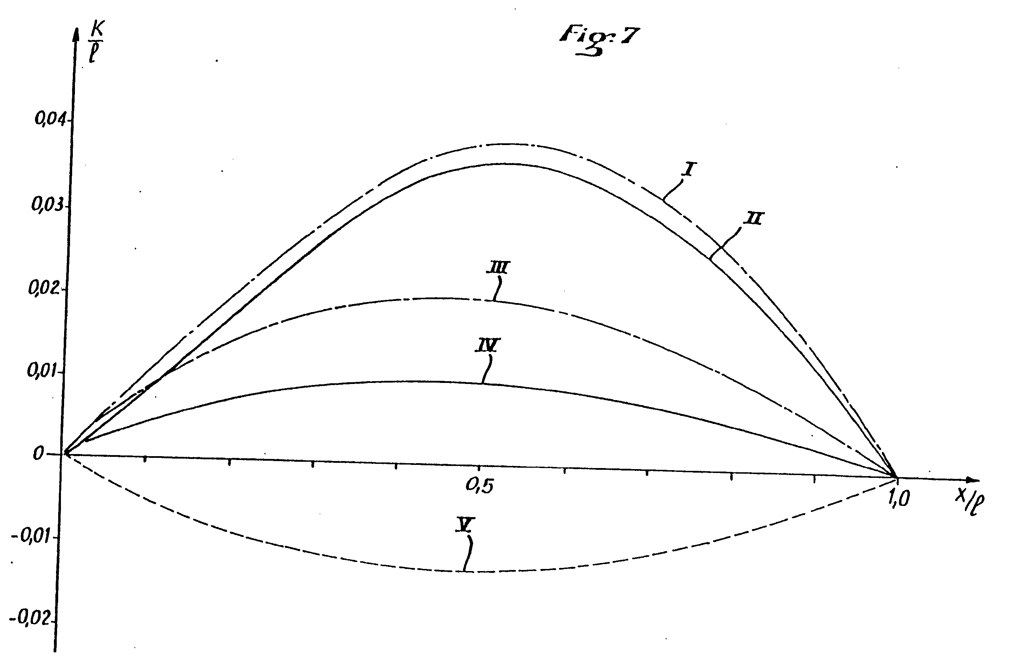

Sur la figure 7, on a représenté l'évolution de la cambrure maximale relative K/l de chacun desdits profils I à V en fonction de l'abscisse réduite X/l.

9

Ces différents profils I à V, définis ci-dessus à l'aide d'équations spécifiques, font en réalité partie d'une famille de profils, dont chacun d'eux peut être déterminé par une loi de variation d'épaisseur et une loi de cambrure le long de la corde du profil, conformément à la technique, qui est définie à la page 112 du rapport "Theory of wing sections" de H. ABOTT et E. VON DOENHOFF publié en 1949 par Mc GRAW HILL BOOK Company, Inc et selon laquelle les coordonnées d'un profil sont obtenues en reportant de part et d'autre de la ligne moyenne, ou squelette, et perpendiculairement à celle-ci, la demi épaisseur en ce point.

Pour définir les profils de la famille à laquelle appartiennent les profils I à V, on utilise avantageusement les formules analytiques suivantes pour la ligne moyenne et la loi d'épaisseur :

— pour la ligne moyenne ou squelette :

(21) $Y/l = c_1(X/l) + c_2(X/l)^2 + c_3(X/l)^3 + c_4(X/l)^4 + c_5(X/l)^5 + c_6(X/l)^6 + c_7(X/l)^7$

— pour la loi d'épaisseur :

(22) $ye/l = b_1(X/l) + b_2(X/l)^2 + b_3(X/l)^3 + b_4(X/l)^4 + b_5(X/l)^5 + b_6(X/l)^6 + b_7(X/l)^7 + b_8(X/l)^8 + b_9(X/l)^9 + b_{10}(X/l)^{10}$

Pour les profils des pales selon l'invention, dont l'épaisseur relative est comprise entre 9% et 15%, chaque coefficient $b_1$ à $b_{10}$ de la formule (22) peut être avantageusement défini par la formule (23.1) à (23.10) correspondante, donnée ci-après :

(23.1) $b_1 = b_{11}(e/l) + b_{12}(e/l)^2 + b_{13}(e/l)^3 + b_{14}(e/l)^4 + b_{15}(e/l)^5 + b_{16}(e/l)^6$

(23.2) $b_2 = b_{21}(e/l) + b_{22}(e/l)^2 + b_{23}(e/l)^3 + b_{24}(e/l)^4 + b_{25}(e/l)^5 + b_{26}(e/l)^6$

....................

....................

(23.10) $b_{10} = b_{101}(e/l) + b_{102}(e/l)^2 + b_{103}(e/l)^3 + b_{104}(e/l)^4 + b_{105}(e/l)^5 + b_{106}(e/l)^6$

Les différents coefficients $b_{11}$ à $b_{106}$ ont alors les valeurs suivantes :

$$b_{11} = +0,98542.10^5 \qquad b_{61} = -0,18709.10^{10}$$
$$b_{12} = -0,43028.10^7 \qquad b_{62} = +0,82093.10^{11}$$
$$b_{13} = +0,74825.10^8 \qquad b_{63} = -0,14340.10^{13}$$
$$b_{14} = -0,64769.10^9 \qquad b_{64} = +0,12464.10^{14}$$
$$b_{15} = +0,27908.10^{10} \qquad b_{65} = -0,53912.10^{14}$$
$$b_{16} = -0,47889.10^{10} \qquad b_{66} = +0,92831.10^{14}$$

$$b_{21} = -0,33352.10^7 \qquad b_{71} = +0,25348.10^{10}$$
$$b_{22} = +0,14610.10^9 \qquad b_{72} = -0,11123.10^{12}$$
$$b_{23} = -0,25480.10^{10} \qquad b_{73} = +0,19432.10^{13}$$
$$b_{24} = +0,22115.10^{11} \qquad b_{74} = -0,16892.10^{14}$$
$$b_{25} = -0,95525.10^{11} \qquad b_{75} = +0,73066.10^{14}$$
$$b_{26} = +0,16428.10^{12} \qquad b_{76} = -0,12582.10^{15}$$

$$b_{31} = +0,39832.10^8 \qquad b_{81} = -0,20869.10^{10}$$
$$b_{32} = -0,17465.10^{10} \qquad b_{82} = +0,91583.10^{11}$$
$$b_{33} = +0,30488.10^{11} \qquad b_{83} = -0,16000.10^{13}$$
$$b_{34} = -0,26484.10^{12} \qquad b_{84} = +0,13909.10^{14}$$
$$b_{35} = +0,11449.10^{13} \qquad b_{85} = -0,60166.10^{14}$$
$$b_{36} = -0,19704.10^{13} \qquad b_{86} = +0,10361.10^{15}$$

$$b41 = -0,24305.10^9$$
$$b42 = +0,10661.10^{11}$$
$$b43 = -0,18618.10^{12}$$
$$b44 = +0,16178.10^{13}$$
$$b45 = -0,69957.10^{13}$$
$$b46 = +0,12043.10^{14}$$

$$b91 = +0,95554.10^9$$
$$b92 = -0,41936.10^{11}$$
$$b93 = +0,73266.10^{12}$$
$$b94 = -0,63693.10^{13}$$
$$b95 = +0,27553.10^{14}$$
$$b96 = -0,47450.10^{14}$$

$$b51 = +0,86049.10^9$$
$$b52 = -0,37753.10^{11}$$
$$b53 = +0,65939.10^{12}$$
$$b54 = -0,57309.10^{13}$$
$$b55 = +0,24785.10^{14}$$
$$b56 = -0,42674.10^{14}$$

$$b101 = -0,18663.10^9$$
$$b102 = +0,81909.10^{10}$$
$$b103 = -0,14311.10^{12}$$
$$b104 = +0,12441.10^{13}$$
$$b105 = -0,58321.10^{13}$$
$$b106 = +0,92688.10^{13}$$

De même, pour des cambrures maximales relatives de squelette comprises entre –2% et +5% de la corde, chaque coefficient c1 à c7 de la formule (21) donnant l'allure du squelette peut être avantageusement défini par la formule (24.1) à (24.7) correspondante, donnée ci-après :

(24.1) $c1 = c11(e/l) + c12(e/l)^2 + c13(e/l)^3 + c14(e/l)^4 + c15(e/l)^5 + c16(e/l)^6$

(24.2) $c2 = c21(e/l) + c22(e/l)^2 + c23(e/l)^3 + c24(e/l)^4 + c25(e/l)^5 + c26(e/l)^6$

...................

...................

(24.7) $c7 = c71(e/l) + c72(e/l)^2 + c73(e/l)^3 + c74(e/l)^4 + c75(e/l)^5 + c76(e/l)^6$

Les différents coefficients c11 à c76 présentent avantageusement les valeurs suivantes :

$$c11 = -0,29874.10^1$$
$$c12 = -0,61332.10^2$$
$$c13 = +0,60890.10^5$$
$$c14 = -0,43208.10^6$$
$$c15 = -0,12037.10^9$$
$$c16 = +0,24680.10^{10}$$

$$c51 = -0,18750.10^4$$
$$c52 = +0,72410.10^5$$
$$c53 = +0,90745.10^7$$
$$c54 = -0,54687.10^9$$
$$c55 = +0,58423.10^{10}$$
$$c56 = +0,50242.10^{11}$$

$$c21 = +0,17666.10^2$$
$$c22 = +0,70530.10^4$$
$$c23 = -0,40637.10^6$$
$$c24 = -0,28310.10^8$$
$$c25 = +0,20813.10^{10}$$
$$c26 = -0,31463.10^{11}$$

$$c61 = +0,12366.10^4$$
$$c62 = -0,43178.10^5$$
$$c63 = -0,61307.10^7$$
$$c64 = +0,33946.10^9$$
$$c65 = -0,26651.10^{10}$$
$$c66 = -0,49209.10^{11}$$

11

$$c31 = -0,38189.10^3$$
$$c32 = +0,31787.10^2$$
$$c33 = +0,23684.10^4$$
$$c34 = -0,47636.10^8$$
$$c35 = -0,26705.10^{10}$$
$$c36 = +0,65378.10^{11}$$

$$c71 = -0,31247.10^3$$
$$c72 = -0,83939.10^4$$
$$c73 = +0,16280.10^7$$
$$c74 = -0,74431.10^8$$
$$c75 = +0,30520.10^8$$
$$c76 = +0,21265.10^{11}$$

$$c41 = +0,13180.10^4$$
$$c42 = -0,44650.10^5$$
$$c43 = -0,65945.10^7$$
$$c44 = +0,35822.10^9$$
$$c45 = -0,24986.10^{10}$$
$$c46 = -0,58675.10^{11}$$

Les formules analytiques ci-dessus permettent, une fois choisies, l'évolution de la loi d'épaisseur en fonction de l'envergure de la pale (voir figure 5d) et l'évolution de la cambrure maximale avec l'envergure (voir la figure 5b) de définir la géométrie de la pale complète.

Pour vérifier l'efficacité de la présente invention, on a construit un agencement de rotor de queue du type décrit en regard des figures 1 et 2 et on a procédé aux expériences suivantes :

a) tout d'abord on a équipé le moyeu rotatif 10 de treize pales 11, constituées chacune du profil constant NACA 63A312, à vrillage constant et l'on a tracé la courbe donnant la figure de mérite FM dudit agencement en fonction du coefficient de portance moyen par pale $\overline{Cz}$, qui est défini par la formule

$$\overline{Cz} = \frac{3T}{\sigma\rho bl\,R\,U^2}$$

dans laquelle T, $\sigma$, $\rho$, 1 et R sont respectivement la poussée ou la traction totale du rotor, le coefficient de diffusion du flux aérodynamique, la masse volumique de l'air, la corde de la pale et le rayon de l'hélice, tels que définis ci-dessus, et b le nombre de pales et U la vitesse périphérique de l'hélice.

On a obtenu la courbe A de la figure 8.

b) ensuite, on a remplacé les treize pales précédentes, par treize pales conformes à la présente invention et on a recommencé les mesures.

On a obtenu la courbe B de la figure 8.

Ces courbes montrent que la figure de mérite maximale FM et le coefficient de portance moyen par pale maximal de l'agencement de rotor testé sous b) sont respectivement supérieurs de 2,8% et de 8% par rapport aux grandeurs correspondantes de l'agencement de rotor testé sous a).

On voit également sur ces courbes que l'amélioration de la figure de mérite est obtenue quel que soit le niveau de charge moyen par pale.

**Revendications**

1. Pale pour hélice carénée comportant un tunnel (4) et un rotor à pales multiples (11) coaxial audit tunnel (4), ledit rotor comportant un moyeu rotatif (10) dont le rayon est de l'ordre de 40% de celui dudit tunnel (4) et sur lequel lesdites pales (11) sont montées par l'intermédiaire de pieds de pale (18), caractérisée

— en ce que, en plan, la partie aérodynamiquement active de ladite pale présente, au-delà du pied de pale (18), une forme rectangulaire de sorte que les profils successifs constituant ladite partie aérodynamiquement active ont tous la même corde l et que la section d'extrémité (30) de ladite partie aérodynamiquement active est droite ; et

— en ce que, le long de l'envergure de la pale comptée à partir de l'axe du tunnel, entre une première section dont l'envergure relative est voisine de 45% et la section d'extrémité (30) de ladite pale :

● la cambrure maximale relative des profils successifs constituant ladite partie aérodynamiquement active de la pale est positive et croît d'une valeur voisine de 0 à une valeur voisine de 0,04 ;

● le vrillage (v) de ladite partie aérodynamiquement active de la pale décroît d'une première valeur voisine de 12° à ladite première section jusqu'à une seconde valeur voisine de 4° à une seconde section dont l'envergure relative est voisine de 0,86, puis croît de cette seconde section jusqu'à une troisième valeur voisine de 4,5° à ladite section d'extrémité de pale ; et

● l'épaisseur maximale relative desdits profils successifs décroît d'une valeur voisine de 13,5% à une valeur voisine de 9,5%.

2. Pale pour hélice carénée selon la revendication 1, caractérisée en ce que ladite cambrure maximale relative croît quasi linéairement de cette valeur voisine de 0 à une valeur égale à 0,036 pour une envergure relative égale à 0,845 en passant par les valeurs 0,01 et 0,02 respectivement pour les envergures relatives 0,53 et 0,66, puis croît de cette valeur égale à 0,036 pour l'envergure relative égale à 0,845 jusqu'à une valeur égale à 0,038 pour l'envergure relative égale à 0,93 et enfin est constante et égale à 0,038 entre les envergures relatives 0,93 et 1.

3. Pale pour hélice carénée selon l'une des revendications 1 ou 2, caractérisée en ce que le pied (18) de ladite pale (11) présente des profils évolutifs dont la cambrure maximale relative est négative et croît d'une valeur égale sensiblement à $-0,013$ pour une envergure relative égale à 0,40 à ladite valeur voisine de 0 pour une envergure relative égale à 0,45.

4. Pale pour hélice carénée selon la revendication 1, caractérisée en ce que, entre les envergures relatives 0,45 et 1, l'évolution du vrillage est au moins sensiblement parabolique, avec minimum à l'envergure relative de 0,86.

5. Pale pour hélice carénée selon la revendication 4, caractérisée en ce que l'axe (31) de vrillage de ladite partie aérodynamiquement active est parallèle à la ligne (28) de bord d'attaque et à la ligne (29) de bord de fuite de celles-ci et est distant de ladite ligne (28) de bord d'attaque d'une distance d approximativement égale à 39% de la longueur de la corde des profils.

6. Pale pour hélice carénée selon la revendication 5, caractérisée en ce que le vrillage du pied (18) de ladite pale (11) croît de ladite valeur voisine de 8° à une envergure relative voisine de 0,38 à ladite valeur voisine de 12° pour l'envergure relative à 0,45.

7. Pale pour hélice carénée selon la revendication 1, caractérisée en ce que l'épaisseur maximale relative des profils décroît linéairement d'une valeur voisine de 13,9% pour une envergure relative égale à 0,40 à une valeur voisine de 9,5% pour une envergure relative égale à 0,93, et est constante et égale à ladite valeur voisine de 9,5% entre les envergures relatives respectivement égales à 0,93 et 1.

8. Pale pour hélice carénée selon la revendication 7, caractérisée en ce que la portion de la partie aérodynamiquement active comprise entre les envergures relatives 0,93 et 1 est constituée par un profil (I) ayant une épaisseur maximale relative égale à 9,5% et tel que, en fonction de l'abscisse réduite X/l le long de la corde, comptée à partir du bord d'attaque,

— les coordonnées réduites de sa ligne d'extrados (35) sont données

● entre X/l = 0 et X/l = 0,39433, par la formule

(1) $Y/l = f_1(X/l)^{1/2} + f_2(X/l) + f_3(X/l)^2 + f_4(X/l)^3 + f_5(X/l)^4 + f_6(X/l)^5 + f_7(X/l)^6$

avec

$f_1 = +0,16227$
$f_2 = -0,11704.10^{-1}$
$f_3 = +0,13247$
$f_4 = -0,25016.10$
$f_5 = +0,10682.10^2$
$f_6 = -0,22210.10^2$
$f_7 = +0,17726.10^2$

● entre X/l = 0,39433 et X/l = 1, par la formule

(2) $Y/l = g_0 + g_1(X/l) + g_2(X/l)^2 + g_3(X/l)^3 + g_4(X/l)^4 + g_5(X/l)^5 + g_6(X/l)^6$

avec

$g_0 = +0,22968$
$g_1 = -0,17493.10$
$g_2 = +0,77952.10$
$g_3 = -0,17457.10^2$
$g_4 = +0,20845.10^2$
$g_5 = -0,13004.10^2$
$g_6 = +0,33371.10$

— alors que les ordonnées réduites de la ligne d'intrados (36) dudit profil sont données

13

• entre $X/l = 0$ et $X/l = 0,11862$, par la formule

(3) $Y/l = h1(X/l)^{1/2} + h2(X/l) + h3(X/l)^2 + h4(X/l)^3 + h5(X/l)^4 + h6(X/l)^5 + h7(X/l)^6$

avec

$h1 = -0,13971$

$h2 = +0,10480.10^{-3}$

$h3 = +0,51698.10$

$h4 = -0,11297.10^3$

$h5 = +0,14695.10^4$

$h6 = -0,96403.10^4$

$h7 = +0,24769.10^5$

• entre $X/l = 0,11862$ et $X/l = 1$, par la formule

(13) $Y/l = i0 + i1 (X/l) + i2(X/l)^2 + i3(X/l)^3 + i4(X/l)^4 + i5(X/l)^5 + i6(X/l)^6$

avec

$i0 = -0,25915.10^{-1}$

$i1 = -0,96597.10^{-1}$

$i2 = +0,49503$

$i3 = +0,60418.10^{-1}$

$i4 = -0,17206.10$

$i5 = +0,20619.10$

$i6 = -0,77922$

9. Pale pour hélice carénée selon l'une quelconque des revendications 7 ou 8, caractérisée en ce que le profil de la section de pale disposée à l'envergure relative de 0,845 a une épaisseur maximale relative égale à 10,2% et est tel que, en fonction de l'abscisse réduite X/l le long de la corde, comptée à partir du bord d'attaque,

— les ordonnées réduites de la ligne d'extrados (35) sont données

• entre $X/l = 0$ et $X/l = 0,39503$, par la formule

(5) $Y/l = j1(X/l)^{1/2} + j2(X/l) + j3(X/l)^2 + j4(X/l)^3 + j5(X/l)^4 + j6(X/l)^5 + j7(X/l)^6$

avec

$j1 = +0,14683$

$j2 = -0,67115.10^{-2}$

$j3 = +0,44720$

$j4 = -0,36828.10$

$j5 = +0,12651.10^2$

$j6 = -0,23835.10^2$

$j7 = +0,18155.10^2$

• entre $X/l = 0,39503$ et $X/l = 1$, par la formule

(6) $Y/l = k0 + k1(X/l) + k2(X/l)^2 + k3(X/l)^3 + k4(X/l)^4 + k5(X/l)^5 + k6(X/l)^6$

avec

$k0 = +0,45955$

$k1 = -0,39834.10$

$k2 = +0,16726.10^2$

$k3 = -0,35737.10^2$

$k4 = +0,41088.10^2$

$k5 = -0,24557.10^2$

$k6 = +0,60088.10$

— alors que les ordonnées réduites de la ligne d'intrados (36) dudit profil sont données

• entre $X/l = 0$ et $X/l = 0,14473$, par la formule

(7) $Y/l = m1(X/l)^{1/2} + m2(X/l) + m3(X/l)^2 + m4(X/l)^3 + m5(X/l)^4 + m6(X/l)^5 + m7(X/l)^6$

avec

$m1 = -0,13297$

$m2 = +0,36163.10^{-1}$

$m3 = +0,17284.10$

$m4 = -0,27664.10^2$

$m5 = +0,30633.10^3$

$m6 = -0,16978.10^4$

$m7 = +0,36477.10^4$

• entre $X/l = 0,14473$ et $X/l = 1$, par la formule

(8) $Y/l = n0 + n1(X/l) + n2(X/l)^2 + n3(X/l)^3 + n4(X/l)^4 + n5(X/l)^5 + n6(X/l)^6$

**14**

avec

$n0 = -0,30824.10^{-1}$

$n1 = -0,20564.10^{-1}$

$n2 = -0,21738$

$n3 = +0,24105.10$

$n4 = -0,53752.10$

$n5 = +0,48110.10$

$n6 = -0,15826.10$

10. Pale pour hélice carénée selon l'une quelconque des revendications 7 à 9, caractérisée en ce que le profil de la section de pale disposée à l'envergure relative de 0,66 a une épaisseur maximale relative égale à 11,7% et est tel que, en fonction de l'abscisse réduite X/l le long de la corde, comptée à partir du bord d'attaque,

— les ordonnées réduites de la ligne d'extrados sont données

• entre X/l = 0 et X/l = 0,28515, par la formule

$$(9) \quad Y/l = t1(X/l)^{1/2} + t2(X/l) + t3(X/l)^2 + t4(X/l)^3 + t5(X/l)^4 + t6(X/l)^5 + t7(X/l)^6$$

avec

$t1 = +0,21599$

$t2 = -0,17294$

$t3 = +0,22044.10$

$t4 = -0,26595.10^2$

$t5 = +0,14642.10^3$

$t6 = -0,39764.10^3$

$t7 = +0,42259.10^3$

• entre X/l = 0,28515 et X/l = 1, par la formule

$$(10) \quad Y/l = u0 + u1(X/l) + u2(X/l)^2 + u3(X/l)^3 + u4(X/l)^4 + u5(X/l)^5 + u6(X/l)^6$$

avec

$u0 = +0,39521.10^{-1}$

$u1 = +0,26170$

$u2 = -0,47274$

$u3 = -0,40872$

$u4 = +0,15968.10$

$u5 = -0,15222.10$

$u6 = +0,51057$

— alors que les ordonnées réduites de la ligne d'intrados dudit profil sont données

• entre X/l = 0 et X/l = 0,17428, par la formule

$$(11) \quad Y/l = v1(X/l)^{1/2} + v2(X/l) + v3(X/l)^2 + v4(X/l)^3 + v5(X/l)^4 + v6(X/l)^5 + v7(X/l)^6$$

avec

$v1 = -0,16526$

$v2 = -0,31162.10^{-1}$

$v3 = +0,57567.10$

$v4 = -0,10148.10^3$

$v5 = +0,95843.10^3$

$v6 = -0,44161.10^4$

$v7 = +0,78519.10^4$

• entre X/l = 0,17428 et X/l = 1, par la formule

$$(12) \quad Y/l = w0 + w1(X/l) + w2(X/l)^2 + w3(X/l)^3 + w4(X/l)^4 + w5(X/l)^5 + w6(X/l)^6$$

avec

$w0 = -0,25152.10^{-1}$

$w1 = -0,22525$

$w2 = +0,89038$

$w3 = -0,10131.10$

$w4 = +0,16240$

$w5 = +0,46968$

$w6 = -0,26400$

11. Pale pour hélice carénée selon l'une quelconque des revendications 7 à 10, caractérisée en ce que le profil de la section de pale disposée à l'envergure relative 0,53 R a une épaisseur maximale relative égale à 13,8% et est tel que en fonction de l'abscisse réduite X/l le long de la corde, comptée à partir du bord d'attaque,

— les ordonnées réduites de la ligne d'extrados sont données

• entre X/l = 0 et X/l = 0,26861, par la formule

(13) $Y/l = \alpha1(X/l)^{1/2} + \alpha2(X/l) + \alpha3(X/l)^2 + \alpha4(X/l)^3 + \alpha5(X/l)^4 + \alpha6(X/l)^5 + \alpha7(X/l)^6$

avec

$\alpha1 = +0,19762$

$\alpha2 = +0,17213$

$\alpha3 = -0,53137.10$

$\alpha4 = +0,56025.10^2$

$\alpha5 = -0,32319.10^3$

$\alpha6 = +0,92088.10^3$

$\alpha7 = -0,10229.10^4$

● entre $X/l = 0,26861$ et $X/l = 1$, par la formule

(14) $Y/l = \beta0 + \beta1(X/l) + \beta2(X/l)^2 + \beta3(X/l)^3 + \beta4(X/l)^4 + \beta5(X/l)^5 + \beta6(X/l)^6$

avec

$\beta0 = +0,28999.10^{-1}$

$\beta1 = +0,38869$

$\beta2 = -0,10798.10$

$\beta3 = +0,80848$

$\beta4 = +0,45025$

$\beta5 = -0,10636.10$

$\beta6 = +0,47182$

— alors que les ordonnées réduites de la ligne d'intrados dudit profil sont données

● entre $X/l = 0$ et $X/l = 0,20934$, par la formule

(15) $Y/l = \gamma1(X/l)^{1/2} + \gamma2(X/l) + \gamma3(X/l)^2 + \gamma4(X/l)^3 + \gamma5(X/l)^4 + \gamma6(X/l)^5 + \gamma7(X/l)^6$

avec

$\gamma1 = -0,25376$

$\gamma2 = +0,61860$

$\gamma3 = -0,96212.10$

$\gamma4 = +0,12843.10^3$

$\gamma5 = -0,90701.10^3$

$\gamma6 = +0,32291.10^4$

$\gamma7 = -0,45418.10^4$

● entre $X/l = 0,20934$ et $X/l = 1$, par la formule

(16) $Y/l = \delta0 + \delta1(X/l) + \delta2(X/l)^2 + \delta3(X/l)^3 + \delta4(X/l)^4 + \delta5(X/l)^5 + \delta6(X/l)^6$

avec

$\delta0 = -0,25234.10^{-1}$

$\delta1 = -0,32995$

$\delta2 = +0,10890.10$

$\delta3 = -0,10066.10$

$\delta4 = -0,32520$

$\delta5 = +0,11326.10$

$\delta6 = -0,64043$

12. Pale pour hélice carénée selon l'une quelconque des revendications 7 à 11, caractérisée en ce que le profil de la section de pied de pale disposée à l'envergure relative 0,40 a une épaisseur maximale relative égale à 13,9% et est tel que, en fonction de l'abscisse réduite $X/l$ le long de la corde, comptée à partir du bord d'attaque,

— les ordonnées réduites de la ligne d'extrados sont données

● entre $X/l = 0$ et $X/l = 0,19606$, par la formule

(17) $Y/l = \varepsilon1(X/l)^{1/2} + \varepsilon2(X/l) + \varepsilon3(X/l)^2 + \varepsilon4(X/l)^3 + \varepsilon5(X/l)^4 + \varepsilon6(X/l)^5 + \varepsilon7(X/l)^6$

avec

$\varepsilon1 = +0,22917$

$\varepsilon2 = -0,22972$

$\varepsilon3 = +0,21262.10$

$\varepsilon4 = -0,39557.10^2$

$\varepsilon5 = +0,32628.10^3$

$\varepsilon6 = -0,13077.10^4$

$\varepsilon7 = +0,20370.10^4$

● entre $X/l = 0,19606$ et $X/l = 1$, par la formule

(18) $Y/l = \lambda0 + \lambda1(X/l) + \lambda2(X/l)^2 + \lambda3(X/l)^3 + \lambda4(X/l)^4 + \lambda5(X/l)^5 + \lambda6(X/l)^6$

avec

$\lambda 0 = +\ 0,32500.10^{-1}$

$\lambda 1 = +\ 0,29684$

$\lambda 2 = -\ 0,99723$

$\lambda 3 = +\ 0,82973$

$\lambda 4 = +\ 0,40616$

$\lambda 5 = -\ 0,10053.10$

$\lambda 6 = +\ 0,44222$

— alors que les ordonnées réduites de la ligne d'intrados dudit profil sont données

• entre X/l = 0 et X/l = 0,26478, par la formule

(19) $Y/l = \mu 1(X/l)^{1/2} + \mu 2(X/l) + \mu 3(X/l)^2 + \mu 4(X/l)^3 + \mu 5(X/l)^4 + \mu 6(X/l)^5 + \mu 7(X/l)^6$

avec

$\mu 1 = -\ 0,19314$

$\mu 2 = -\ 0,22031$

$\mu 3 = +\ 0,44399.10$

$\mu 4 = -\ 0,41389.10^2$

$\mu 5 = +\ 0,23230.10^3$

$\mu 6 = -\ 0,66179.10^3$

$\mu 7 = +\ 0,74216.10^3$

• entre X/l = 0,26478 et X/l = 1, par la formule

(20) $Y/l = \nu 0 + \nu 1(X/l) + \nu 2(X/l)^2 + \nu 3(X/l)^3 + \nu 4(X/l)^4 + \nu 5(X/l)^5 + \nu 6(X/l)^6$

avec

$\nu 0 = -\ 0,42417.10^{-1}$

$\nu 1 = +\ 0,29161$

$\nu 2 = +\ 0,57883$

$\nu 3 = +\ 0,41309$

$\nu 4 = -\ 0,19045.10$

$\nu 5 = +\ 0,18776.10$

$\nu 6 = -\ 0,63583$

13. Hélice carénée, caractérisée en ce qu'elle comporte une pluralité de pales telles que spécifiées sous l'une quelconque des revendications 1 à 12.

14. Agencement de rotor de queue pour aéronef à voilure tournante, caractérisé en ce qu'il comporte une pluralité de pales telles que spécifiées sous l'une quelconque des revendications 1 à 12.

## Patentansprüche

1. Propellerblatt für Mantelpropeller bestehend aus einem Tunnel (4) und einem mit dem Tunnel (4) koaxial liegenden Mehrfachblattrotor (11), der eine Drehnabe (10) aufweist, dessen Radius um 40% dem des Tunnels (4) entspricht und auf dem die Blätter (11) mit Hilfe von Blattfüßen (18) montiert sind, dadurch gekennzeichnet, daß

der aerodynamische aktive Teil des Blattes im Grundriß über den Blattfuß (18) hinausgehend eine derartige Rechteckform aufweist, daß die aufeinanderfolgenden Profile, die den aktiven aerodynamischen Teil bilden, alle dieselbe Flügeltiefe l haben und daß der Endschnitt (30) des aktiven aerodynamischen Teiles gerade ist und daß,

auf der Länge der Blattspannweite gerechnet, ausgehend von der Tunnelachse, zwischen einem ersten Schnitt, dessen relative Spannweite bei etwa 45% liegt, und dem Endschnitt (30) des Blattes :

die relative Maximalwölbung der den aktiven aerodynamischen Teil des Blattes bildenden aufeinanderfolgenden Profile positiv ist und von einem nahe 0 bis nahe 0,04 liegenden Wert ansteigt,

die Verwindung (v) des aktiven aerodynamischen Teiles des Blattes von einem ersten Wert nahe 12° am ersten Schnitt bis zu einem zweiten Wert nahe 4° an einem zweiten Schnitt abnimmt, dessen relative Spannweite nahe bei 0,86 liegt, und dann von diesem zweiten Schnitt bis zu einem dritten Wert nahe bei 4,5° am Endschnitt des Blattes ansteigt und die relative Maximaldicke der aufeinanderfolgenden Profile von einem Wert nahe 13,5% bis zu einem Wert nahe 9,5% abnimmt.

2. Mantelpropellerblatt nach Anspruch 1, dadurch gekennzeichnet, daß die relative Maximalwölbung quasi linear von diesem nahe 0 liegenden Wert bis auf einen 0,036 betragenden Wert für eine relative Spannweite 0,845 ansteigt und dabei die Werte 0,01 und 0,02 für die relativen Spannweiten 0,53 bzw. 0,66 durchläuft, dann von diesem Wert 0,036 für die relative Spannweite 0,845 bis zu einem Wert 0,038 für die relative Spannweite 0,93 ansteigt sowie schließlich konstant ist und zwischen den relativen Spannweiten 0,93 und 1 gleich 0,038 ist.

3. Mantelpropellerblatt nach einem der vorhergehenden Ansprüche 1 oder 2, dadurch gekennzeichnet, daß der Fuß (18) des Blattes (11) evolutive Profile aufweist, deren relative Maximalwölbung negativ ist und von einem allgemein bei − 0,013 liegenden Wert für eine relative Spannweite 0,40 auf den Wert nahe 0 für eine relative Spannweite 0,45 ansteigt.

4. Mantelpropellerblatt nach Anspruch 1, dadurch gekennzeichnet, daß zwischen den relativen Spannweiten 0,45 und 1 die Entwicklung der Verwindung zumindest allgemein parabolisch verläuft und bei der relativen Spannweite von 0,86 ihr Minimum erreicht.

5. Mantelpropellerblatt nach Anspruch 4, dadurch gekennzeichnet, daß die Verwindungsachse (31) des aerodynamischen aktiven Teiles zur linie (28) der Vorderkante sowie zur linie (29) seiner Winterkante parallel und von der linie (28) der Vorderkante in einem Abstand $d$ liegt, der annähernd 39% der länge der Profiltiefe entspricht.

6. Mantelpropellerblatt nach Anspruch 5, dadurch **gekennzeichnet**, daß die Verwindung des Fußes (18) des Blattes (11) vom Wert nahe 8° bei einer relativen Spannweite nahe 0,38 auf den Wert nahe 12° für die relative Spannweite 0,45 ansteigt.

7. Mantelpropellerblatt nach Anspruch 1, dadurch **gekennzeichnet**, daß die relative Maximaldicke der Profile linear von einem Wert nahe 13,9% für eine relative Spannweite 0,40 auf einen Wert nahe 9,5% für eine relative Spannweite 0,93 abnimmt und konstant sowie dem Wert nahe 9,5% zwischen den relativen Spannweiten 0,93 bzw. 1 gleich ist.

8. Mantelpropellerblatt nach Anspruch 7, dadurch **gekennzeichnet**, daß der Abschnitt des aktiven, zwischen den relativen Spannweiten 0,93 und 1 liegenden aerodynamischen Teils aus einem Profil (I) gebildet ist, das eine gleich 9,5% betragende relative Maximaldicke aufweist und derart ausgebildet ist, daß, bezogen auf die X/1 reduzierte Abszisse auf der Länge der Tiefe und gerechnet ausgehend von der Vorderkante :

die reduzierten Koordinaten seiner Oberseitenlinie (35) gegeben sind

zwischen $X/l = 0$ und $X/l = 0,39433$ durch die Formel

(1) $Y/l = f1(X/l)^{1/2} + f2(X/l) + f3(X/l)^2 + f4(X/l)^3 + f5(X/l)^4 + f6(X/l)^5 + f7(X/l)^6$

mit

$f1 = + 0,16227$

$f2 = − 0,11704 . 10^{-1}$

$f3 = + 0,13247$

$f4 = − 0,25016 . 10$

$f5 = + 0,10682 . 10^2$

$f6 = − 0,22210 . 10^2$

$f7 = + 0,17726 . 10^2$

zwischen $X/l = 0,39433$ und $Y/l = 1$ durch die formel

(2) $Y/l = g0 + g1(X/l) + g2(X/l)^2 + g3(X/l)^3 + g4(X/l)^4 + g5(X/l)^5 + g6(X/l)^6$

mit

$g0 = + 0,22968$

$g1 = − 0,17493 . 10$

$g2 = + 0,77952 . 10$

$g3 = − 0,17457 . 10^2$

$g4 = + 0,20845 . 10^2$

$g5 = − 0,13004 . 10^2$

$g6 = + 0,33371 . 10,$

während die reduzierten Ordinaten seiner Unterseitenlinie (36) des Profils gegeben sind

zwischen $X/l = 0$ und $X/l = 0,11862$ durch die formel

(3) $Y/l = h1(X/l)^{1/2} + h2(X/l) + h3(X/l)^2 + h4(X/l)^3 + h5(X/l)^4 + h6(X/l)^5 + h7(X/l)^6$

mit

$h1 = − 0,13971$

$h2 = + 0,10480 . 10^{-3}$

$h3 = + 0,51698 . 10$

$h4 = − 0,11297 . 10^3$

$h5 = + 0,14695 . 10^4$

$h6 = − 0,96403 . 10^4$

$h7 = + 0,24769 . 10^5$

zwischen $X/l = 0,11862$ und $X/l = 1$ durch die formel

(4) $Y/l = i0 + i1(X/l) + i2(X/l)^2 + i3(X/l)^3 + i4(X/l)^4 + i5(X/l)^5 + i6(X/l)^6$

mit

i0 = − 0,25915.10$^{-1}$

i1 = − 0,96597.10$^{-1}$

i2 = + 0,49503

i3 = + 0,60418.10$^{-1}$

i4 = − 0,17206.10

i5 = + 0,20619.10

i6 = − 0,77922.

9. Mantelpropellerblatt nach einem der vorhergehenden Ansprüche 7 oder 8, dadurch **gekennzeichnet**, daß das Profil des an der relativen Spannweite von 0,845 angeordnete Blattschnitts eine relative Maximaldicke von 10,2% hat sowie derart ausgebildet ist, daß, bezogen auf die X/l reduzierte Abszisse auf der Länge der Tiefe und gerechnet ausgehend von der Vorderkante :

die reduzierten Koordinaten seiner Oberseitenlinie (35) gegeben sind

zwischen X/l = 0 und X/l = 0,39503 durch die Formel

(5) $Y/l = j1(X/l)^{1/2} + j2(X/l) + j3(X/l)^2 + j4(X/l)^3 + j5(X/l)^4 + j6(X/l)^5 + j7(X/l)^6$

mit

j1 = + 0,14683

j2 = − 0,67115.10$^{-2}$

j3 = + 0,44720

j4 = − 0,36828.10

j5 = + 0,12651.10$^2$

j6 = − 0,23835.10$^2$

j7 = + 0,18155.10$^2$

zwischen X/l = 0,39503 und X/l = 1 durch die Formel

(6) $Y/l = k0 + k1(X/l) + k2(X/l)^2 + k3(X/l)^3 + k4(X/l)^4 + k5(X/l)^5 + k6(X/l)^6$

mit

k0 = + 0,45955

k1 = − 0,39834.10

k2 = + 0,16726.10$^2$

k3 = − 0,35737.10$^2$

k4 = − 0,41088.10$^2$

k5 = − 0,24557.10$^2$

k6 = − 0,60088.10,

während die reduzierten Ordinaten der Unterseitenlinie (36) des Profils gegeben sind

zwischen X/l = 0 und X/l = 0,14473 durch die formel

(7) $Y/l = m1(X/l)^{1/2} + m2(X/l) + m3(X/l)^2 + m4(X/l)^3 + m5(X/l)^4 + m6(X/l)^5 + m7(X/l)^6$

mit

m1 = − 0,13297

m2 = + 0,36163.10$^{-1}$

m3 = + 0,17284.10

m4 = − 0,27664.10$^2$

m5 = + 0,30633.10$^3$

m6 = − 0,16978.10$^4$

m7 = + 0,36477.10$^4$

zwischen X/l = 0,14473 und X/l = 1 durch die formel

(8) $Y/l = n0 + n1(X/l) + n2(X/l)^2 + n3(X/l)^3 + n4(X/l)^4 + n5(X/l)^5 + n6(X/l)^6$

mit

n0 = − 0,30824.10$^{-1}$

n1 = − 0,20564.10$^{-1}$

n2 = − 0,21738

n3 = + 0,24105.10

n4 = − 0,53752.10

n5 = + 0,48110.10

n6 = − 0,15826.10.

10. Mantelpropellerblatt nach einem der vorhergehenden Ansprüche 7 bis 9, dadurch **gekennzeichnet**, daß das Profil des an der relativen Spannweite von 0,66 angeordnete Blattschnitts eine relative Maximaldicke von 11,7% hat sowie derart ausgebildet ist, daß, bezogen auf die X/l reduzierte Abszisse auf der Länge der Tiefe und gerechnet ausgehend von der Vorderkante :

die reduzierten Ordinaten seiner Oberseitenlinie gegeben sind

zwischen X/l = 0 und X/l = 0,28515 durch die formel

(9) $Y/l = t1(X/l)^{1/2} + t2(X/l) + t3(X/l)^2 + t4(X/l)^3 + t5(X/l)^4 + t6(X/l)^5 + t7(X/l)^6$

mit

$t1 = +0,21599$

$t2 = -0,17294$

$t3 = +0,22044.10$

$t4 = -0,26595.10^2$

$t5 = +0,14642.10^3$

$t6 = -0,39764.10^3$

$t7 = +0,42259.10^3$

zwischen X/l = 0,28515 und X/l = 1 durch die formel

(10) $Y/l = u0 + u1(X/l) + u2(X/l)^2 + u3(X/l)^3 + u4(X/l)^4 + u5(X/l)^5 + u6(X/l)^6$

mit

$u0 = +0,39521.10^{-1}$

$u1 = +0,26170$

$u2 = -0,47274$

$u3 = -0,40872$

$u4 = +0,15968.10$

$u5 = -0,15222.10$

$u6 = +0,51057,$

während die reduzierten Ordinaten der Unterseitenlinie des Profils gegeben sind

zwischen X/l = 0 und X/l = 0,17428 durch die formel

(11) $Y/l = v1(X/l)^{1/2} + v2(X/l) + v3(X/l)^2 + v4(X/l)^3 + v5(X/l)^4 + v6(X/l)^5 + v7(X/l)^6$

mit

$v1 = -0,16526$

$v2 = -0,31162.10^{-1}$

$v3 = +0,57567.10$

$v4 = -0,10148.10^3$

$v5 = +0,95843.10^3$

$v6 = -0,44161.10^4$

$v7 = +0,78519.10^4$

zwischen X/l = 0,17428 und X/l = 1 durch die Formel

(12) $Y/l = w0 + w1(X/l) + w2(X/l)^2 + w3(X/l)^3 + w4(X/l)^4 + w5(X/l)^5 + w6(X/l)^6$

mit

$w0 = -0,25152.10^{-1}$

$w1 = -0,22525$

$w2 = +0,89038$

$w3 = -0,10131.10$

$w4 = +0,16240$

$w5 = +0,46968$

$w6 = -0,26400.$

11. Mantelpropellerblatt nach einem der vorhergehenden Ansprüche 7 bis 10, dadurch **gekennzeichnet**, daß das Profil des an der relativen Spannweite von 0,53 R angeordnete Blattschnitts eine relative Maximaldicke von 13,8% hat sowie derart ausgebildet ist, daß, bezogen auf die X/l reduzierte Abszisse auf der Länge der Tiefe und gerechnet ausgehend von der Vorderkante :

die reduzierten Ordinaten seiner Oberseitenlinie gegeben sind

zwischen X/l = 0 und X/l = 0,26861 durch die Formel

(13) $Y/l = \alpha1(X/l)^{1/2} + \alpha2(X/l) + \alpha3(X/l)^2 + \alpha4(X/l)^3 + \alpha5(X/l)^4 + \alpha6(X/l)^5 + \alpha7(X/l)^6$

mit

$\alpha1 = +0,19762$

$\alpha2 = +0,17213$

$\alpha3 = -0,53137.10$

$\alpha4 = +0,56025.10^2$

$\alpha5 = -0,32319.10^3$

$\alpha6 = +0,92088.10^3$

$\alpha7 = -0,10229.10^4$

zwischen X/l = 0,26861 und X/l = 1 durch die formel

(14) $Y/l = \beta0 + \beta1(X/l) + \beta2(X/l)^2 + \beta3(X/l)^3 + \beta4(X/l)^4 + \beta5(X/l)^5 + \beta6(X/l)^6$

mit

$\beta 0 = +0{,}28999.10^{-1}$

$\beta 1 = +0{,}38869$

$\beta 2 = -0{,}10798.10$

$\beta 3 = +0{,}80848$

$\beta 4 = +0{,}45025$

$\beta 5 = -0{,}10636.10$

$\beta 6 = +0{,}47182,$

während die reduzierten Ordinaten der Unterseitenlinie des Profils gegeben sind

zwischen X/l = 0 und X/l = 0,20934 durch die formel

(15) $Y/l = \gamma 1(X/l)^{1/2} + \gamma 2(X/l) + \gamma 3(X/l)^2 + \gamma 4(X/l)^3 + \gamma 5(X/l)^4 + \gamma 6(X/l)^5 + \gamma 7(X/l)^6$

mit

$\gamma 1 = -0{,}25376$

$\gamma 2 = +0{,}61860$

$\gamma 3 = -0{,}96212.10$

$\gamma 4 = +0{,}12843.10^3$

$\gamma 5 = -0{,}90701.10^3$

$\gamma 6 = +0{,}32291.10^4$

$\gamma 7 = -0{,}45418.10^4$

zwischen X/l = 0,20934 und X/l = 1 durch die formel

(16) $Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6$

mit

$\delta 0 = -0{,}25234.10^{-1}$

$\delta 1 = -0{,}32995$

$\delta 2 = +0{,}10890.10$

$\delta 3 = -0{,}10066.10$

$\delta 4 = -0{,}32520$

$\delta 5 = +0{,}11326.10$

$\delta 6 = -0{,}64043.$

12. Mantelpropellerblatt nach einem der vorhergehenden Ansprüche 7 bis 11, dadurch **gekennzeichnet**, daß das Profil des an der relativen Spannweite von 0,40 angeordnete Blattfußschnitts eine relative Maximaldicke von 13,9% hat sowie derart ausgebildet ist, daß, bezogen auf die X/l reduzierte Abszisse auf der Länge der Tiefe und gerechnet ausgehend von der Vorderkante :

die reduzierten Ordinaten seiner Oberseitenlinie gegeben sind

zwischen X/l = 0 und X/l = 0,19606 durch die Formel

(17) $Y/l = \varepsilon 1(X/l)^{1/2} + \varepsilon 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6$

mit

$\varepsilon 1 = +0{,}22917$

$\varepsilon 2 = -0{,}22972$

$\varepsilon 3 = +0{,}21262.10$

$\varepsilon 4 = -0{,}39557.10^2$

$\varepsilon 5 = +0{,}32628.10^3$

$\varepsilon 6 = -0{,}13077.10^4$

$\varepsilon 7 = +0{,}20370.10^4$

zwischen X/l = 0,19606 und X/l = 1 durch die Formel

(18) $Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6$

mit

$\lambda 0 = +0{,}32500.10^{-1}$

$\lambda 1 = +0{,}29684$

$\lambda 2 = -0{,}99723$

$\lambda 3 = +0{,}82973$

$\lambda 4 = +0{,}40616$

$\lambda 5 = +0{,}10053.10$

$\lambda 6 = +0{,}44222,$

während die reduzierten Ordinaten der Unterseitenlinie des Profils gegeben sind

zwischen X/l = 0 und X/l = 0,26478 durch die Formel

(19) $Y/l = \mu 1(X/l)^{1/2} + \mu 2(X/l) + \mu 3(X/l)^2 + \mu 4(X/l)^3 + \mu 5(X/l)^4 + \mu 6(X/l)^5 + \mu 7(X/l)^6$

mit

$\mu_1 = -0,19314$

$\mu_2 = -0,22031$

$\mu_3 = +0,44399.10$

$\mu_4 = -0,41389.10^2$

$\mu_5 = +0,23230.10^3$

$\mu_6 = -0,66179.10^3$

$\mu_7 = +0,74216.10^3$

zwischen $X/l = 0,26478$ und $X/l = 1$ durch die Formel

(20) $Y/l = v_0 + v_1(X/l) + v_2(X/l)^2 + v_3(X/l)^3 + v_4(X/l)^4 + v_5(X/l)^5 + v_6(X/l)^6$

mit

$v_0 = -0,42417.10^{-1}$

$v_1 = -0,29161$

$v_2 = +0,57883$

$v_3 = +0,41309$

$v_4 = -0,19045.10$

$v_5 = +0,18776.10$

$v_6 = -0,63583.$

13. Mantelpropeller, dadurch **gekennzeichnet**, daß er mehrere nach den Angaben in einem der vorhergehenden Ansprüche 1 bis 12 gefertigte Blätter aufweist.

14. Heckrotor für Drehflügler, dadurch **gekennzeichnet**, daß er mehrere nach den Angaben in einem der vorhergehenden Ansprüche 1 bis 12 gefertigte Blätter aufweist.


## Claims

1. Blade for shrouded propeller comprising a tunnel (4) and a rotor with multiple blades (11) coaxial to said tunnel (4), said rotor comprising a rotating hub (10) of which the radius is of the order of 40% that of said tunnel (4) and on which said blades (11) are mounted via blade roots (18), characterized in that :
   —— in plan, the aerodynamically active part of said blade presents, beyond the blade shank (18), a rectangular shape with the result that the successive profiles constituting said aerodynamically active part all have the same chord $l$ and that the end section (30) of said aerodynamically active part is straight ; and,
   —— along the span of the blade counted from the axis of the tunnel, between a first section of which the relative span is close to 45% and the end section (30) of said blade :
      • the maximum relative camber of the successive profiles constituting said aerodynamically active part of the blade is positive and increases from a value close to 0 to a value close to 0.04 ;
      • the twist ($v$) of said aerodynamically active part of the blade decreases from a first value close to 12° at said first section to a second value close to 4° at a second section of which the relative span is close to 0.86, then increases from this second section to a third value close to 4.5° at said end section of blade ; and
      • the maximum relative thickness of said successive profiles decreases from a value close to 13.5% to a value close to 9.5%.

2. Shrouded propeller blade according to claim 1, characterized in that said maximum relative camber increases virtually linearly from this value close to 0 to a value equal to 0.036 for a relative span equal to 0.845, passing through values 0.01 and 0.02 respectively for the relative spans 0.53 and 0.66, then increases from this value equal to 0.036 for the relative span equal to 0.845 up to a value equal to 0.038 for the relative span equal to 0.93, and, finally, is constant and equal to 0.038 between the relative spans 0.93 and 1.

3. Shrouded propeller blade according to one of claims 1 or 2, characterized in that the root (18) of said blade (11) presents evolutive profiles of which the maximum relative camber is negative and increases from a value substantially equal to −0.013 for a relative span equal to 0.40 to said value close to 0 for a relative span equal to 0.45.

4. Shrouded propeller blade according to claim 1, characterized in that, between the relative spans 0.45 and 1, the evolution of the twist is at least substantially parabolic, with a minimum for the relative span of 0.86.

5. Shrouded propeller blade according to claim 4, characterized in that the axis (31) of twist of said aerodynamically active part is parallel to the line (28) of leading edge and to the line (29) of trailing edge thereof and is distant from said line (28) of leading edge by a distance $d$ approximately equal to 39% of the length of the chord of the profiles.

6. Shrouded propeller blade according to claim 5, characterized in that the twist of the root (18) of said blade (11) increases from said value close to 8° for a relative span close to 0.38 to said value close to 12° for the relative span equal to 0.45.

7. Shrouded propeller blade according to claim 1, characterized in that the maximum relative thickness of the profiles decreases linearly from a value close to 13.9% for a relative span equal to 0.40 to a value close to 9.5% for a relative span equal to 0.93, and is constant and equal to said value close to 9.5% between the relative spans respectively equal to 0.93 and 1.

8. Shrouded propeller blade according to claim 7, characterized in that the portion of the aerodynamically active part included between the relative spans 0.93 and 1 is constituted by a profile (I) having a maximum relative thickness equal to 9.5% and such that, as a function of the reduced abscissa $X/l$ along the chord, counted from the leading edge,

— the reduced ordinates of its extrados line (35) are given

• between $X/l = 0$ and $X/l = 0.39433$, by the formula

(1) $Y/l = f1(X/l)^{1/2} + f2(X/l) + f3(X/l)^2 + f4(X/l)^3 + f5(X/l)^4 + f6(X/l)^5 + f7(X/l)^6$

with

$f1 = +0.16227$
$f2 = -0.11704.10^{-1}$
$f3 = +0.13247$
$f4 = -0.25016.10$
$f5 = +0.10682.10^2$
$f6 = -0.22210.10^2$
$f7 = +0.17726.10^2$

• between $X/l = 0.39433$ and $X/l = 1$, by the formula

(2) $Y/l = g0 + g1(X/l) + g2(X/l)^2 + g3(X/l)^3 + g4(X/l)^4 + g5(X/l)^5 + g6(X/l)^6$

with

$g0 = +0.22968$
$g1 = -0.17493.10$
$g2 = +0.77952.10$
$g3 = -0.17457.10^2$
$g4 = -0.20845.10^2$
$g5 = -0.13004.10^2$
$g6 = +0.33371.10$

— whilst the reduced ordinates of the intrados line (36) of said profile are given

• between $X/l = 0$ and $X/l = 0.11862$, by the formula

(3) $Y/l = h1(X/l)^{1/2} + h2(X/l) + h3(X/l)^2 + h4(X/l)^3 + h5(X/l)^4 + h6(X/l)^5 + h7(X/l)^6$

with

$h1 = -0.13971$
$h2 = +0.10480.10^{-3}$
$h3 = +0.51698.10$
$h4 = -0.11297.10^3$
$h5 = +0.14695.10^4$
$h6 = -0.96403.10^4$
$h7 = +0.24769.10$

• between $X/l = 0.11862$ and $X/l = 1$, by the formula

(4) $Y/l = i0 + i1(X/l) + i2(X/l)^2 + i3(X/l)^3 + i4(X/l)^4 + i5(X/l)^5 + i6(X/l)^6$

with

$i0 = -0.25915.10^{-1}$
$i1 = -0.96597.10^{-1}$
$i2 = +0.49503$
$i3 = +0.60418.10^{-1}$
$i4 = -0.17206.10$
$i5 = +0.20619.10$
$i6 = -0.77922$

9. Shrouded propeller blade according to one of claims 7 or 8, characterized in that the profile of the blade section disposed at the relative span of 0.845 has a maximum relative thickness equal to 10.2% and is such that, as a function of the reduced abscissa $X/l$ along the chord, counted from the leading edge,

— the reduced ordinates of the extrados line (35) are given

• between $X/l = 0$ and $X/l = 0.39503$, by the formula

(5) $Y/l = j1(X/l)^{1/2} + j2(X/l) + j3(X/l)^2 + j4(X/l)^3 + j5(X/l)^4 + j6(X/l)^5 + j7(X/l)^6$

with

23

j1 = + 0.14683
j2 = − 0.67115.10$^{-2}$
j3 = + 0.44720
j4 = − 0.36828.10
j5 = + 0.12651.10$^2$
j6 = − 0.23835.10$^2$
j7 = + 0.18155.10$^2$

● between X/l = 0.39503 and X/l = 1, by the formula

(6) $Y/l = k0 + k1(X/l) + k2(X/l)^2 + k3(X/l)^3 + k4(X/l)^4 + k5(X/l)^5 + k6(X/l)^6$

with

k0 = + 0.45955
k1 = − 0.39834.10
k2 = + 0.16726.10$^2$
k3 = − 0.35737.10$^2$
k4 = + 0.41088.10$^2$
k5 = − 0.24557.10$^2$
k6 = + 0.60088.10

— whilst the reduced ordinates of the intrados line (36) of said profile are given

● between X/l = 0 and X/l = 0.14473, by the formula

(7) $Y/l = m1(X/l)^{1/2} + m2(X/l) + m3(X/l)^2 + m4(X/l)^3 + m5(X/l)^4 + m6(X/l)^5 + m7(X/l)^6$

with

m1 = − 0.13297
m2 = + 0.36163.10$^{-1}$
m3 = + 0.17284.10
m4 = − 0.27664.10$^2$
m5 = + 0.30633.10$^3$
m6 = − 0.16978.10$^4$
m7 = + 0.36477.10$^4$

● between X/l = 0.14473 and X/l = 1, by the formula

(8) $Y/l = n0 + n1(X/l) + n2(X/l)^2 + n3(X/l)^3 + n4(X/l)^4 + n5(X/l)^5 + n6(X/l)^6$

with

n0 = − 0.30824.10$^{-1}$
n1 = − 0.20564.10$^{-1}$
n2 = − 0.21738
n3 = + 0.24105.10
n4 = − 0.53752.10
n5 = + 0.48110.10
n6 = − 0.15826.10

10. Shrouded propeller blade according to one of claims 7 to 9, characterized in that the profile of the blade section disposed at the relative span of 0.66 has a maximum relative thickness equal to 11.7% and is such that, as a function of the reduced abscissa X/l along the chord, counted from the leading edge,

— the reduced ordinates of the extrados line are given

● between X/l = 0 and X/l = 0.28515, by the formula

(9) $Y/l = t1(X/l)^{1/2} + t2(X/l) + t3(X/l)^2 + t4(X/l)^3 + t5(X/l)^4 + t6(X/l)^5 + t7(X/l)^6$

with

t1 = + 0.21599
t2 = − 0.17294
t3 = + 0.22044.10
t4 = − 0.26595.10$^2$
t5 = + 0.14642.10$^3$
t6 = − 0.39764.10$^3$
t7 = + 0.42259.10$^3$

● between X/l = 0.28515 and X/l = 1, by the formula

(10) $Y/l = u0 + u1(X/l) + u2(X/l)^2 + u3(X/l)^3 + u4(X/l)^4 + u5(X/l)^5 + u6(X/l)^6$

with

u0 = + 0.39521.10$^{-1}$
u1 = + 0.26170
u2 = − 0.47274

24

$u3 = -0.40872$

$u4 = +0.15968.10$

$u5 = -0.15222.10$

$u6 = +0.51057$

— whilst the reduced ordinates of the intrados line of said profile are given

• between $X/l = 0$ and $X/l = 0.17428$, by the formula

(11) $Y/l = v1(X/l)^{1/2} + v2(X/l) + v3(X/l)^2 + v4(X/l)^3 + v5(X/l)^4 + v6(X/l)^5 + v7(X/l)^6$

with

$v1 = -0.16526$

$v2 = -0.31162.10^{-1}$

$v3 = +0.57567.10$

$v4 = -0.10148.10^3$

$v5 = +0.95843.10^3$

$v6 = -0.44161.10^4$

$v7 = +0.78519.10^4$

• between $X/l = 0.17428$ and $X/l = 1$, by the formula

(12) $Y/l = w0 + w1(X/l) + w2(X/l)^2 + w3(X/l)^3 + w4(X/l)^4 + w5(X/l)^5 + w6(X/l)^6$

with

$w0 = -0.25152.10^{-1}$

$w1 = -0.22525$

$w2 = -0.89038$

$w3 = -0.10131.10$

$w4 = +0.16240$

$w5 = +0.46968$

$w6 = -0.26400$

11. Shrouded propeller blade according to one of claims 7 to 10, characterized in that the profile of the blade section disposed at the relative span 0.53 R has a maximum relative thickness equal to 13.8% and is such that, as a function of the reduced abscissa $X/l$ along the chord, counted from the leading edge,

— the reduced ordinates of the extrados line are given

• between $X/l = 0$ and $X/l = 0.26861$, by the formula

(13) $Y/l = \alpha1(X/l)^{1/2} + \alpha2(X/l) + \alpha3(X/l)^2 + \alpha4(X/l)^3 + \alpha5(X/l)^4 + \alpha6(X/l)^5 + \alpha7(X/l)^6$

with

$\alpha1 = +0.19762$

$\alpha2 = +0.17213$

$\alpha3 = -0.53137.10$

$\alpha4 = +0.56025.10^2$

$\alpha5 = -0.32319.10^3$

$\alpha6 = +0.92088.10^3$

$\alpha7 = -0.10229.10^4$

• between $X/l = 0.26861$ and $X/l = 1$, by the formula

(14) $Y/l = \beta0 + \beta1(X/l) + \beta2(X/l)^2 + \beta3(X/l)^3 + \beta4(X/l)^4 + \beta5(X/l)^5 + \beta6(X/l)^6$

with

$\beta0 = +0.28999.10^{-1}$

$\beta1 = +0.38869$

$\beta2 = -0.10798.10$

$\beta3 = +0.80848$

$\beta4 = +0.45025$

$\beta5 = -0.10636.10$

$\beta6 = +0.47182$

— whilst the reduce ordinates of the intrados line of said profile are given

• between $X/l = 0$ and $X/l = 0.20934$, by the formula

(15) $Y/l = \gamma1(X/l)^{1/2} + \gamma2(X/l) + \gamma3(X/l)^2 + \gamma4(X/l)^3 + \gamma5(X/l)^4 + \gamma6(X/l)^5 + \gamma7(X/l)^6$

with

$\gamma1 = -0.25376$

$\gamma2 = +0.61860$

$\gamma3 = -0.96212.10$

$\gamma4 = +0.12843.10^3$

$\gamma5 = -0.90701.10^3$

$\gamma 6 = + 0.32291.10^4$

$\gamma 7 = - 0.45418.10^4$

- between $X/l = 0.20934$ and $X/l = 1$, by the formula

(16) $Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6$

with

$\delta 0 = - 0.25234.10^{-1}$

$\delta 1 = - 0.32995$

$\delta 2 = + 0.10890.10$

$\delta 3 = - 0.10066.10$

$\delta 4 = - 0.32520$

$\delta 5 = + 0.11326.10$

$\delta 6 = - 0.64043$

12. Shrouded propeller blade according to one of claims 7 to 11, characterized in that the profile of the section of blade root disposed at the relative span of 0.40 has a maximum relative thickness equal to 13.9% and is such that, as a function of the reduced abscissa $X/l$ along the chord, counted from the leading edge,

— the reduced ordinates of the extrados line are given

- between $X/l = 0$ and $X/l = 0.19606$, by the formula

(17) $Y/l = \varepsilon 1(X/l)^{1/2} + \varepsilon 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6$

with

$\varepsilon 1 = + 0.22917$

$\varepsilon 2 = - 0.22972$

$\varepsilon 3 = + 0.21262.10$

$\varepsilon 4 = - 0.39557.10^2$

$\varepsilon 5 = + 0.32628.10^3$

$\varepsilon 6 = - 0.13077.10^4$

$\varepsilon 7 = + 0.20370.10^4$

- between $X/l = 0.19606$ and $X/l = 1$, by the formula

(18) $Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6$

with

$\lambda 0 = + 0.32500.10^{-1}$

$\lambda 1 = + 0.29684$

$\lambda 2 = - 0.99723$

$\lambda 3 = + 0.82973$

$\lambda 4 = + 0.40616$

$\lambda 5 = - 0.10053.10$

$\lambda 6 = + 0.44222$

— whilst the reduce ordinates of the intrados line of said profile are given

- between $X/l = 0$ and $X/l = 0.26478$, by the formula

(19) $Y/l = \mu 1(X/l)^{1/2} + \mu 2(X/l) + \mu 3(X/l)^2 + \mu 4(X/l)^3 + \mu 5(X/l)^4 + \mu 6(X/l)^5 + \mu 7(X/l)^6$

with

$\mu 1 = - 0.19314$

$\mu 2 = - 0.22031$

$\mu 3 = + 0.44399.10$

$\mu 4 = - 0.41389.10^2$

$\mu 5 = + 0.23230.10^3$

$\mu 6 = - 0.66179.10^3$

$\mu 7 = + 0.74216.10^3$

- between $X/l = 0.26478$ and $X/l = 1$, by the formula

(20) $Y/l = \nu 0 + \nu 1(X/l) + \nu 2(X/l)^2 + \nu 3(X/l)^3 + \nu 4(X/l)^4 + \nu 5(X/l)^5 + \nu 6(X/l)^6$

with

$\nu 0 = - 0.42417.10$

$\nu 1 = - 0.29161$

$\nu 2 = + 0.57883$

$\nu 3 = + 0.41309$

$\nu 4 = - 0.19045.10$

$\nu 5 = + 0.18776.10$

$\nu 6 = - 0.63583$

13. Shrouded propeller, characterized in that it comprises a plurality of blades as set forth in any one of claims 1 to 12.

14. Tail rotor arrangement for rotary wing aircraft, characterized in that it comprises a plurality of blades as set forth in any one of claims 1 to 12.

Fig:1

Fig:2

EP 0 332 492 B1

Fig. 3

Fig. 8

## Fig. 4a

## Fig. 4b

## Fig. 4c

30

EP 0 332 492 B1

Fig. 5a

Fig. 5b

Fig. 5c

Fig. 5d

31

## Fig. 6 a

## Fig. 6 b

## Fig. 6 c

## Fig. 6 d

## Fig. 6 e

Fig. 7